# EUROPÄISCHE PATENTANMELDUNG

(11) **EP 1 703 664 A1**
(43) Veröffentlichungstag der Anmeldung: **20.09.2006**
(21) Anmeldenummer: 06005258.6
(22) Anmeldetag: 15.03.2006
(51) Int. Cl.: H04L 12/22, H04L 12/28, H04L 29/06

(54) **Verfahren und Schleusenelement zum Schutz eines ersten Datennetzwerks vor einem direkten Zugriff aus einem zweiten Datennetzwerk**

(30) Priorität: 15.03.2005 EP 05005556
(71) Anmelder: Meinel, Christoph, Prof. Dr. sc, 14109 Berlin Wannsee (DE)
(72) Erfinder: Meinel, Christoph, Prof. Dr. sc, 14109 Berlin Wannsee (DE)
(74) Vertreter: Dreiss, Fuhlendorf, Steimle & Becker

(57) **Zusammenfassung**

Die Erfindung betrifft ein Verfahren und ein Schleusenelement (4) zum Schutz eines ersten Datennetzwerks (1) vor einem direkten Zugriff aus einem zweiten Datennetzwerk (2) heraus. Das Schleusenelement (4) ist zwischen dem ersten Datennetzwerk (1) und dem zweiten Datennetzwerk (2) zum Zwecke einer physikalischen Trennung des ersten Datennetzwerks (1) von dem zweiten Datennetzwerk (2) angeordnet, Um das erste Datennetzwerk (1) noch besser als bisher vor unberechtigten Zugriffen aus dem zweiten Datennetzwerk (2) heraus schützen zu können, wird vorgeschlagen, dass die über das zweiten Netzwerk (2) gemäß einem zweiten Datenübertragungsprotokoll (z.B. TCP/IP, UDP) in das Schleusenelement (4) eingehenden Daten in ein proprietäres Schleusenelement-internes drittes Datenübertragungsprotokoll umgewandelt, gemäß dem dritten Protokoll in dem Schleusenelement (4) übertragen und dann vor dem Verlassen des Schleusenelements (4) in ein in dem ersten Netzwerk (1) verwendetes erstes Datenübercragungsprotokoll (z-B- TCP/IP, UDP) umgewandelt werden, wobei sich das dritte Datenübertragungsprotokoll von dem zweiten Datenübertragungsprotokoll unterscheidet.

## Beschreibung

### Beschreibung

Die vorliegende Erfindung betrifft ein Schleusenelement umfassend einen ersten Rechner, der einem ersten Datennetzwerk zugeordnet ist, einen zweiten Rechner, der einem zweiten Datennetzwerk zugeordnet ist, und mindestens eine zwischen dem ersten Rechner und dem zweiten Rechner angeordnete Schleusenkammer. Das Schleusenelement ist für eine Datenübertragung zwischen dem ersten Datennetzwerk und dem zweiten Datennetzwerk bei gleichzeitiger physikalischen Trennung des ersten Netzwerks von dem zweiten Netzwerk ausgebildet, indem die mindestens eine Schleusenkammer wechselweise entweder mit dem ersten Rechner oder mit dem zweiten Rechner verbunden ist. Das erste Datennetzwerk ist zur Übertragung von Daten nach einem ersten Datenübertragungsprotokoll und das zweite Datennetzwerk zur Übertragung von Daten nach einem zweiten Datenübertragungsprotokoll ausgebildet.

Außerdem betrifft die Erfindung ein Verfahren zum Schutz eines ersten Datennetzwerks gegen direkte Zugriffe aus einem zweiten Datennetzwerk heraus, wobei zwischen dem ersten Datennetzwerk und dem zweiten Datennetzwerk ein Schleusenelement für eine physikalische Trennung des ersten Datennetzwerks von dem zweiten Datennetzwerk durch wechselweises verbinden des Schleusenelements entweder mit dem ersten Datennetzwerk oder mit dem zweiten Datennetzwerk angeordnet wird. Das erste Datennetzwerk ist zur Übertragung von Daten nach einem ersten Datenübertragungsprotokoll und das zweite Datennetzwerk zur Übertragung von Daten nach einem zweiten Datenübertragungsprotokoll ausgebildet.

Ein Datenübertragungsprotokoll im Sinne der vorliegenden Erfindung ist ein in einem Datennetzwerk zum Einsatz kommendes Kommunikationsprotokoll und kann auch als Netzprotokoll oder Netzwerkprotokoll bezeichnet werden. Ein Protokoll ist eine exakte Vereinbarung, nach der Daten zwischen Computern oder Rechnern bzw. Prozessen ausgetauscht werden, die durch ein Datennetzwerk miteinander verbunden sind (sog. verteiltes System). Die Vereinbarung besteht aus einem Satz von Regeln und Formaten (sog. Syntax), die das Kommunikationsverhalten der kommunizierenden Instanzen in den Rechnern bestimmen (sog. Semantik). Ein Datenübertragungsprotokoll ist also funktional gesehen ein verteiltes Computerprogramm, welches die Übertragung von Daten in dem Netzwerk steuert und regelt.

Der in einem Protokoll beschriebene Aufbau eines Datenpakets enthält für den Datenaustausch wichtige Informationen über das Paket wie beispielsweise:
- dessen Absender und Empfänger,
- den Typ des Pakets (z. B. Verbindungsaufbau, verbindungsabbau oder reine Nutzdaten),
- die Paketlänge, und
- ggf. eine Prüfsumme.
Diese Informationen werden den Nutzdaten als sog. Header vorangestellt oder als sog. Trailer angehängt.

Außerdem werden in vielen Protokollen feste Paketsequenzen für den verbindungsaufbau und -abbau beschrieben. Diese Maßnahmen verursachen weiteren Datenverkehr (Traffic) auf den Datenleitungen des Netzwerks - den sog. Overhead. Dieser Overhead ist unerwünscht, weil er die Kapazität belastet, wird aber aufgrund der wichtigen Aufgaben, die Protokolle leisten, in der Regel in Kauf genommen.

Unterscheidungsmerkmale von Datenübertragungsprotokollen sind beispielsweise:
- Anzahl von Parteien, die an der Kommunikation teilnehmen: Gibt es für eine Übermittlung immer nur einen Empfänger, spricht man von Unicast, bei Übertragungen an mehrere Teilnehmer von Multicast.
- Findet die Kommunikation nur in eine Richtung statt, spricht man von Simplex, fließen die Daten wechselweise in beide Richtungen, von Halb-Duplex oder gleichzeitig in beide Richtungen, von Vollduplex.
- Stellung der Kommunikationsteilnehmer: Sind diese untereinander gleichberechtigt, spricht man von Peer-to-Peer oder symmetrischer, anderenfalls von asymmetrischer Kommunikation. Das am weitesten verbreitete asymmetrische Modell ist das Client-Server-System, bei dem ein Dienstanbieter (der Server) Anfragen von verschiedenen Clients bearbeitet, wobei es immer die Clients sind, die die Kommunikation initiieren, d. h. einen Kanal öffnen.
- Wird nach einer Anfrage auf Antwort gewartet, spricht man von synchroner Kommunikation, sonst von asynchroner Kommunikation.
- Während einer paketorientierten Kommunikation werden Nachrichten bzw. Datenpakete übertragen, beim Streaming wird mit einem kontinuierlichen Datenstrom einzelner zeichen gearbeitet.
- Bei verbindungsorientierten (connection oriented) Protokollen wird durch spezielle Paketsequenzen der Anfang und das Ende einer Verbindung definiert. Innerhalb einer solchen Verbindung wird durch das Protokoll meistens gewährleistet, dass Pakete in einer bestimmten Reihenfolge ankommen, und/oder sichergestellt, dass die Pakete nochmals gesendet werden, falls sie nicht angekommen sind (so bspw. bei TCP). Verbindungslose (connectionless) Protokolle bieten diesen Komfort nicht, haben aber einen geringeren Overhead (z.B. UDP).

Nachfolgend werden beispielhaft einige Standard-Datenubertragungsprotokolle erwähnt und zum Teil kurz erläutert, die von verschiedenen Schichten des ISO/OSI-Schichtenmodells verwendet werden:
1) Anwendungsschicht (Application Layer): DNS (Domain Name System), TLS/SSL (Transport Layer Security/ Secure Server Line), TFTP (Trivial File Transfer Protocol), FTP (File Transfer Protocol), HTTP (Hypertext Transfer Protocol), IMAP (Internet Message Access Protocol), IRC (Internet Relay Chat), NNTP (Network News Transfer Protocol), POP3 (Post Office Protocol Version 3), SIP (Session Initiation Protocol), SMTP (Simple Mail Transfer Protocol), SNMP (Simple Network Management Protocol), SSH (Secure SHell), TELNET (Protokoll, das benötigt wird, wenn man über Internet einen fremden Computer anwählen, sich dort einloggen und Rechenkapazitäten nutzen will. Es bietet sich z.B. an für die Nutzung fremder Datenbanken. Der eigene Rechner nimmt dann nur noch Terminal-Funktionen wahr.), BitTorrent (Ein Filesharing-Protokoll, das besonders für große Dateien jenseits von 100 MB geeignet ist. Entwickler: Bram Cohen; Programmiersprache: Python o.a.), RTP (Real-time Transport Protocol), rlogin (Remote Login ist ein Programm für Linux, das es ermöglicht, sich auf entfernten Rechnern über Netzwerk/Internet anzumelden und eine Eingabeaufforderung (Shell) zu erhalten, von der aus man arbeiten kann, als säße man tatsächlich an dem Rechner. Alternativ sind bspw. das sicherere SSH-Protokoll bzw. die zugehörigen Programme ssh, scp, usw.), ENRP (Endpoint haNdlespace Redundancy Protocol).
   HTTP: Das Hypertext Transfer Protocol (HTTP) ist ein Protokoll zur Übertragung von Daten über ein Netzwerk. Es wird hauptsächlich eingesetzt, um Webseiten und andere Daten aus dem World Wide Web (WWW) von einem web-Server in einen Webbrowser eines Client zu laden.
   FTP: Das File Transfer Protocol (engl. für "Dateiübertragungsverfahren", kurz FTP), ist ein in RFC 959 spezifiziertes Netzwerkprotokoll zur Dateiübertragung über TCP/IP-Netzwerke. FTP ist in der Anwendungsschicht des TCP/IP Protokollstapels angesiedelt. Es wird benutzt, um Dateien vom Server zum Client (Download), vom Client zum Server (Upload) oder clieritgesteuert zwischen zwei Servern zu übertragen. Neben dem FTP gibt es auch noch das IBM Transfer Protocol, welches die Verbindung von PC zu Maznframe-Umgebungen ermöglicht. FTP benutzt zur Kommunikation mehr als eine Verbindung: Zunächst wird zum Port 21 des Servers, dem Control Port oder Standard Port, eine Verbindung zur Authentifizierung und Befehlsübertragung aufgebaut. Hier reagiert der Server auf jeden Befehl des Clients mit einem Statuscode, oft mit einem angehängten, erklärenden Text. zur eigentlichen Datenübertragung wird dann im Bedarfsfall eine separate Verbindung initiiert (allgemein gilt: Port 20 - Datenübertragung, Port 21 - Initiierung der Session, Kommandoübertragung).
   TFTP: Das Trivial File Transfer Protocol (TFTP) ist ein sehr einfaches Dateiübertragungsprotokoll. Es wurde 1980 auf der Basis von EFTP entwickelt. TFTP unterstützt lediglich das Lesen oder Schreiben von Dateien. Nicht vorhanden sind viele Funktionen des mächtigeren FTP wie etwa Rechtevergabe mittels chmod (change mode; Kommandozeilenprogramm unter unix, mit dem sich Dateiattribute verändern lassen), Anzeigen der vorhandenen Dateien oder Benutzerauthentifizierung. Im Gegensatz zu FTP, das ein verbindungsorientiertes Transportprotokoll erfordert, wird TFTP normalerweise über ein verbindungsloses Protokoll wie UDP betrieben. Motivation für die Entwicklung von TFTP war das Laden von Betriebssystem-Kernels oder Konfigurationen über das Netzwerk. Hierfür sind das verbindungsorientierte TCP und das darauf aufsetzende FTP viel zu komplex. TFTP wurde dagegen bewusst einfach gehalten. Die wichtigsten Merkmale sind die folgenden:
   - Paketorientiertes Protokoll
   - Jedes Paket wird bestätigt
   - Lesen und Schreiben von Dateien auf einem Server
   - keine Auflistung von verzeichnisinhalten
   - keine Authentifizierung, Kompression oder Verschlüsselung
   - maximale Dateigröße 32 MBytes (16 MBytes bei manchen Implementierungen)
   SMTP: Das Simple Mail Transfer Protocol SMTP (zu deutsch etwa Einfaches E-Mail-Übertragungsverfahren) ist ein Protokoll der Internetprotokollfamilie, das zum Austausch von E-Mails in Computer-Netzwerken dient. Es wird dabei vorrangig zum Einspeisen und zum Weiterleiten von E-Mails verwendet, zum Abholen von Nachrichten kommen spezialisierte Protokolle, zum Beispiel das POP3-Protokoll oder das IMAP-Protokoll, zum Einsatz. SMTP Server nehmen traditionell Verbindungen auf Standard Port 25 ("smtp") entgegen, neuere Server auch auf Port 587 ("submission"). Ein Benutzer wird üblicherweise von der Abarbeitung des SMTP-Protokolls nichts mitbekommen, da dies sein Mailprogramm, der sogenannte Mail User Agent (MUA), im Hintergrund erledigt. Dieses Programm verbindet sich zu einem SMTP-Server, dem Mail Submission Agent (MSA), der die Mail über weitere SMTP-Server, sogenannten Mail Transfer Agents (MTA), zum Ziel transportiert. Da SMTP als Protokoll zum Transport von lokal erstellten Mails zwischen Servern konzipiert wurde, übernahm dabei ursprünglich ein einzelner Server auf Port 25 ("smtp") die Rolle von MSA und MTA. Der dedizierte Port 587 ("submission") für MSAs wurde erst 1998 eingeführt, um den unterschiedlichen Anforderungen beider Aufgaben gerecht zu werden: Ein MSA akzeptiert ausdrücklich nur Nachrichten berechtigter Nutzer und bereitet sie vor der Einspeisung in das Mailsystem gegebenenfalls standardkonform auf- Wegen der nahen Verwandtschaft beider Dienste wird die Funktionalität von MSA und MTA üblicherweise immer noch von nur einem Programm, das dann auf beiden Ports Verbindungen annimmt, bereitgestellt.
   POP3: POP3 (Post Office Protocol Version 3) ist ein Übertragungsprotokoll, über welches ein Client E-Mails von einem E-Mail-Server abholen kann. Es wird im RFC 1939 beschrieben. POP3 ist ein ASCII-Protokoll, wobei die Steuerung der Datenübertragung durch Kommandos geschieht, die standardmäßig an den Port 110 geschickt werden. Eine ständige Verbindung zum Mailserver ist bei POP3 nicht notwendig. Die Verbindung wird bei Bedarf vom Client zum Server erzeugt und danach wieder beendet. POP3 ist in der Funktionalität sehr beschränkt und erlaubt nur das Abholen und Löschen von E-Mails am E-Mail-Server. Für weitere Funktionalitäten wie hierarchische Mailboxen direkt am Mailserver, Zugriff auf mehrere Mailboxen während einer Sitzung, Vorselektion der E-Mails, usw. müssen Protokolle wie IMAP verwendet werden. Als Gegenstück zu POP3 zum Versenden von E-Mails ist üblicherweise in Clients und Servern das SMTP-Protokoll implementiert.
2) Transportschicht (Transport Layer):
   TCP (Transmission Control Protocol), UDP (User Datagram Protocol), DCCP (Datagram Control Congestion Protocol), SCTP (Stream Control Transmission Protocol), IL (Transport Layer Protokoll entwickelt bei Bell Labs ursprünglich als Teil des sog. Plan 9 Betriebssystems und zum Transport von 9P eingesetzt. Dem IL-Protokoll wurde die Internet Protokoll Nummer 40 zugeordnet. Es ist ähnlich wie TCP, aber viel einfacher.), RUDP (Das Reliable User Datagram Protocol wurde als Transport Layer Protokoll bei Bell Labs ursprünglich als Teil des sog. Plan 9 Betriebssystems entwickelt. RUDP wird überall dort eingesetzt, wo UDP zu primitiv ist, da eine Paketübertragung in einer garantierten Reihenfolge nicht gegeben ist, aber TCP zu viel Komplexität bzw. Overhead hinzufügen würde.).
   TCP: Zuverlässiges Transport Protokoll innerhalb der verschiedenen TCP/IP Protokolle. TCP stellt sicher, dass alle Daten genau und in Takt beim Empfänger ankommen. TCP ist verbindungsorientiert und erfordert einen Handshake bevor die Übertragungssession beginnen kann. UDP: Das unzuverlässige Gegenstück zu TCP ist UDP, das für Streaming Daten, VoIP (voice over IP), Videakonferenzen, etc. verwendet wird.
3) Netzwerkschicht (Network Layer): IP (Internet Protocol, z.B. Ipv4, Ipv6), ICMP (Internet Control Message Protocol), IGMP (Internet Group Management Protocol), ARP (Address Resolution Protocol), RARP (Reverse Address Resolution Protocol).
4) Verbindungsschicht (Link Layer): Ethernet (ist eine rahmenbasierte Computer-Vernetzungstechnologie für lokale Netze (LANs). Sie definiert Kabeltypen und Signalisierung für die Bitübertragungsschicht (physische Schicht) sowie Paketformate und Protokolle für die Medienzugriffskontrolle (Media Access Control, MAC)/ Sicherungsschicht des OSI-Modells. Ethernet ist weitestgehend in der IEEE-Norm 802.3 standardisiert), Wi-Fi (Wireless Fidelity ist ein Standard nach IEEE 802_11b für die drahtlose Datenübertragung in Fulnknetzen (W-LAN) mit einer Übertragungsrate bis zu 11 Megabit pro Sekunde), Token ring (ist eine Vernetzungstechnologie für Computernetzwerke, festgelegt in der Spezifikation IEEE 802.5. Sie definiert Kabeltypen und Signalisierung für die Bitübertragungsschicht, Paketformate und Protokolle für die Medienzugriffskontrolle (Media Access Control, MAC)/ Sicherungsschicht des OSI-Modells.), PPP (Point-to-Point Protocol zur Übertragung von Datenpaketen über serielle Datenleitungen), SLIP (Serial Line Internet Protocol zur Übertragung von IP-Datenpaketen über eine serielle Datenleitung), FDDI (Fiber Distributed Data Interface ist eine Ende der 80er Jahre entwickelte 100 MBit/s standardisierte Netzwerkarchitektur für lokale Netzwerke (ANSI Standard X3T9.5). Als Medium werden Glasfaserkabel verwendet, ein doppelter, gegenläufiger Ring mit Token-zugriffsmechanismus. 1994 wurde der FDDI-Standard erweitert und die Übertragung auch über geschirmte (STP) und ungeschirmte (UTP Typ 5) verdrillte Kupferleitungen standardisiert (CDDI, C für Copper).), ATM (Ein Asynchronous Transfer Mode Netzwerk verpackt Daten in Zellen einer variierbaren vorgegebenen Größe, die effizient von einem zum anderen Punkt mit Überragungsraten zwischen 64 kBit/s und 655 MBit/s übertragen werden können.), Frame Relay (ist eine Datenübertragungstechnik, die ursprünglich als Datenzubringerdienst für ISDN entwickelt wurde. In Europa werden häufig die Basisstationen des GSM-Netzes, die die Funksignale der Mobiltelefone empfangen und ins Festnetz überleiten, über Frame Relay angebunden. Aber auch Netzbetreiber bieten Frame Relay Verbindungen als billigere Alternative zu einer Standleitung an.), SMDS (Der von Bellcore definierte Switched Multimegabit Data Service war der erste verfügbare Breitband-Dienst für die Datenübertragung in öffentlichen Netzen, und zwar zunächst im Bereich der Metropolitan Area Networks (MAN). Er wurde speziell im Zusammenhang mit DQDB, dem nach IEEE 802.6 definierten verteilten Netzwerk definiert. SMDS kann über Anschlüsse mit 1,5 (T1) beziehungsweise 2 (DS1) Mbit/sec benutzt werden.).

Die wesentlichen Aufgaben moderner, leistungsstarker Protokolle sind beispielsweise die folgenden:
- ein sicherer und zuverlässiger Verbindungsaufbau zwischen den an der Kommunikation beteiligten Rechnern (Handshake),
- ein verlässliches Zustellen von Paketen,
- ein Wiederholen nicht angekommener Pakete,
- ein Zustellen der Datenpakete an den/die gewünschten Empfänger,
- ein Sicherstellen einer fehlerfreien Übertragung (Prüfsumme),
- ein Zusammenfügen ankommender Datenpakete in der richtigen Reihenfolge beim Empfänger zur Wiederherstellung der übermittelten Daten, und
- ein verhindern eines Eingriffs unbefugter Dritter (durch verschlüsselung).

Als Funktionsbeispiel wird nachfolgend der Ablauf des verbindungsaufbaus beim TCP-Protokoll gezeigt (sog. Handshake-verfahren).

Zunächst schickt Rechner #1 ein Datenpaket, in dem steht, dass er eine Verbindung zu Rechner #2 aufbauen möchte. Darauf antwortet Rechner #2, dass er dazu bereit ist. Rechner #1 bestätigt anschließend Rechner #2, dass er verstanden hat, dass Rechner #2 bereit ist. Die Verbindung ist damit hergestellt, und der eigentliche Datenaustausch zwischen Rechner #1 und Rechner #2 kann beginnen.

Nachfolgend werden einige typische Anwendungen und die entsprechende Protokollbezeichnung am Beispiel des Internets gezeigt (Anwendung - (Protakollbezeichnung):
- das Laden von Web-Seiten - (HTTP; Hypertext Transfer Protocol)
- das Verschicken von E-Mails - (SMTP; Simple Mail Transfer Protocol)
- das Herunterladen von Dateien - (FTP; File Transfer Protocol).

Die Funktionen der Protokolle bauen zum Teil aufeinander auf. So lösen beispielsweise die Protokolle TCP und IP das Problem der Datenübertragung. Dieses schichtweise Aufeinanderaufbauen der Protokolle wird mit Hilfe des OSI-Modells dargestellt.

Das erste Datennetzwerk ist beispielsweise ein firmeninternes oder unternehmensweites Intranet, und das zweite Datennetzwerk ist beispielsweise das Internet. Durch das zwischen den Rechnern der beiden Netzwerke angeordnete Schleusenelement wird eine permanente Unterbrechung der Netzwerkverbindung zwischen den beiden Netzwerken auf Hardware-Ebene sichergestellt. Dadurch wird eine direkte Verbindung bzw. ein direkter Datenübertragungskanal zwischen den beiden Netzwerken und somit auch ein direkter Durchgriff eines potentiellen Angreifers aus dem Internet heraus auf das Intranet verhindert. Durch die Realisierung der Unterbrechung auf Hardware-Ebene statt auf Software-Ebene wird eine Manipulation des Schleusenelements zur Überbrückung der Unterbrechung praktisch ausgeschlossen.

Zur Datenübertragung über das Schleusenelement ist dieses bzw. eine Schleusenkammer des Schleusenelements jeweils wechselweise entweder mit dem ersten Datennetzwerk oder dem zweiten Datennetzwerk verbunden. Von dem zweiten Rechner des zweiten Netzwerks (dem Internet) an den ersten Rechner des ersten Netzwerks (einem Intranet) zu übertragende Daten werden bei bestehender Verbindung zwischen dem zweiten Rechner und dem Schleusenelement bzw. einer Schleusenkammer des Schleusenelements von dem zweiten Rechner an das Schleusenelement übermittelt, wo sie in der Schleusenkammer zwischengespeichert und ggf. im Hinblick auf eine erhöhte Datensicherheit für den Ziel-Rechner bzw. das ziel-Netzwerk sicherheitstechnisch verarbeitet werden. Die Verarbeitung umfasst bspw. ein Virenscannen. So können bspw. vor der Weiterleitung der Daten infizierte und/oder gefährdete Dateien bearbeitet und/oder entfernt werden oder aber eine Weiterleitung der Daten kann komplett verhindert werden.

Da zum zeitpunkt der sicherheitstechnischen Verarbeitung der Daten in dem Schleusenelement die Verbindung zwischen Schleusenelement bzw. Schleusenkammer und zweitem Netzwerk unterbrochen ist, ist ein direkter Durchgriff aus dem Internet auf das Intranet unmöglich. Dann schaltet das Schleusenelement bzw. das Schaltelement auf das erste Netzwerk (Intranet) um und die Daten werden aus dem Zwischenspeicher der Schleusenkammer an den ersten Rechner übermittelt. Während dessen ist die Verbindung zu dem zweiten Netzwerk (Internet) unterbrochen, so dass ein Zugriff aus dem zweiten Netzwerk heraus unmöglich ist.

Ein Rechnersystem und ein Verfahren zum Schutz eines ersten Rechners eines ersten Datennetzwerks gegen Hacker-Angriffe durch einen zweiten Rechner eines zweiten Datennetzwerks der eingangs genannten Art ist bspw. in der Form eines sog. "SingleGate Lock Keepers" aus der DE 198 38 253 A1 bekannt. Das aus dieser Druckschrift bekannte Rechnersystem bzw. das beschriebene Schleusenelement erlaubt zu jedem Zeitpunkt jeweils lediglich eine Datenübertragung in eine Richtung. Das Schleusenelement weist eine Schleusenkammer (z.B. mit einem Zwischenspeicher) und ein Schaltelement auf, welches die Verbindung der Schleusenkammer zwischen dem ersten Netzwerk und dem zweiten Netzwerk umschaltet. Daten können also in beide Richtungen überragen werden, jedoch mit zum Teil erheblichen Verzögerungszeiten.

Aus der Druckschrift Meinel, Ch., Cheng, F., Ferring, P.: "The DualGate Lock-Keeper: A Highly Efficient, Flexible and Applicable Network Security Solution"; Proceedings of the 4th ACIS International Conference on Software Engineering, Artificial Intelligence, Networking, and Parallel/Distributed Computing (SNPD'03), October 16-18, 2003, Lübeck, Germany, XP-002350504 ist ebenfalls ein Rechnersystem und ein Verfahren der eingangs genannten Art in Form eines sog. "DualGate Lock Keepers" bekannt. Das aus dieser Druckschrift bekannte Rechnersystem bzw. das beschriebene Schleusenelement erlaubt zu jedem Zeitpunkt jeweils eine Datenübertragung in beide Richtungen. Voraussetzung dafür ist, dass das Schleusenelement zwei separate Schleusenkammern (z.B. jeweils mit einem zwischenspeicher) und ein Schaltelement mit zwei vorzugsweise elektromechanischen Schaltern aufweist, wobei jeweils ein Schalter einer Schleusenkammer zugeordnet ist. Der eine Schalter verbindet die erste Schleusenkammer des Schleusenelements mit dem einen Netzwerk und der zweite Schalter die zweite Schleusenkammer des Schleusenelements gleichzeitig mit dem anderen Netzwerk. Nach dem Umschalten des Schaltelements verbindet dann der eine Schalter die erste Schleusenkammer des Schleusenelements mit dem zweiten Netzwerk und der andere Schalter die zweite Schleusenkammer des Schleusenelements gleichzeitig mit dem ersten Netzwerk. Selbstverständlich müssen die Schaltzyklen der beiden Schalter nicht notwendigerweise 100% versetzt zueinander sein, sondern können sich auch ganz oder teilweise überlagern, so dass zumindest zeitweise beide Schleusenkammern mit: dem gleichen Netzwerk verbunden sind.

Aus der WO 97/16782 ist ein Rechnersystem mit einem zwischen zwei Datennetzwerken angeordnetem Schleusenelement bekannt, bei dem zu jedem Zeitpunkt der Datenübertragung die Verbindung zwischen den beiden Netzwerken unterbrochen ist, so dass ein direkter Zugriff aus dem Internet (aus dem zweiten Netzwerk) heraus auf einen Rechner eines firmeninternen Netzwerks (des ersten Netzwerks) und eine Manipulation des Rechners unmöglich ist. Zu keinem Zeitpunkt während der Datenübertragung beszeht zwischen den beiden Netzwerken eine direkte Datenübertragungsverbindung oder ein direkter Datenübertragungskanal.

Nachteilig bei dem bekannten Schleusenelement ist jedoch die Tatsache, dass das Schaltelement, das die mindestens eine Schleusenkammer zu vorgebbaren Zeitpunkten zwischen den zwei den beiden Netzwerken entsprechenden Stellungen umschaltet, von einem in dem Schleusenelement angeordneten Rechner mittels eines Software-Timers gesteuert wird. Es wäre also möglich, wenn in einer der beiden Stellungen des Schaltelements eine direkte Verbindung zwischen dem zweiten Netzwerk (bspw. dem Internet) und dem Schleusenelement besteht, von einem Rechner des Internets aus auf den Rechner im Schleusenelement zuzugreifen und durch Manipulation des Rechners bzw. des darauf abgelegten Software-Timers die Steuerung des Schaltelements zu beeinflussen bzw. von dem zweiten Netzwerk aus zu kontrollieren. Das bekannte Schleusenelement ist also manipulierbar und stellt somit keine in jedem Fall zuverlässige Trennung zwischen den zwei Netzwerken dar.

Ausgehend von dem beschriebenen Stand der Technik liegt der vorliegenden Erfindung die Aufgabe zugrunde, den Schutz vor unberechtigten bzw. unautorisierten Zugriffen auf einen ersten Rechner eines ersten Datennetzwerks von einem zweiten Rechner eines zweiten Datennetzwerks aus noch besser als bisher zu verhindern

Zur Lösung dieser Aufgabe werden zusätzliche Sicherungsmaßnahmen an dem Schleusenelement und an dem verfahren vorgeschlagen. Insbesondere wird ausgehend von dem Schleusenelement der eingangs genannten Art vorgeschlagen, dass das Schleusenelement für eine Datenübertragung zwischen dem ersten Datennetzwerk und dem zweiten Datennetzwerk erste Mittel zur Umwandlung eingehender Daten von dem in dem Datennetzwerk, über das die Daten eingehen, verwendeten Datenübertragungsprotokoll in ein drittes Datenübertragungsprotokoll und zweite Mittel zur Umwandlung der Daten von dem dritten Datenübertragungsprotokoll in das in dem Datennetzwerk, über das die Daten ausgehen, verwendete Datenübertragungsprotokoll aufweist, wobei sich das dritte Datenübertragungsprotokoll von dem in dem Datennetzwerk, über das die Daten eingehen, verwendeten Datenübertragungsprotokoll unterscheidet.

Erfindungsgemäß wird also vorgeschlagen, dass innerhalb des Schleusenelements ein eigenes, von dem in dem Datennetzwerk, über das die Daten eingehen, verwendeten Datenübertragungsprotokoll abweichendes Protokoll verwendet wird. Dadurch ist es unbefugten Dritten nur möglich, aus einem der Datennetzwerke heraus, insbesondere in Manipulierungsabsicht, auf das Schleusenelement zuzugreifen, wenn sie das in dem Schleusenelement verwendete Protokoll kennen. Durch diese Sicherheitsfunktion können auf Standard-Protokolle, wie bspw. TCP/IP, basierende besonders gefährliche Angriffe verhindert werden, da die entsprechende Standard-Protokollverbindung beim Eintritt in das Schleusenelement unterbrochen bzw. unterbunden wird und die weitere Datenübertragung über das Schleusenelement anhand eines anderen, einem Angreifer in aller Regel unbekannten, gegen Manipulationen besonders resistenten proprietären Protokolls erfolgt. Auf diese Weise wird ein direkter zugriff auf ein zu schützendes internes Netzwerk praktisch unmöglich. Insbesondere Online-Angriffe auf das Schleusenelement und dessen Manipulation können auf diese Weise wirksam verhindert werden. Diese zusätzliche Sicherheitsfunktion kann auch als "Protocol Isolation" bezeichnet werden.

Das Schleusenelement weist mindestens einen dritten Rechner auf, welcher die Steuerung des mindestens einen Schaltelements und das Auslösen oder Veranlassen (sog. Triggern) einer Datenübermittlung aus einem Netzwerk in eine Schleusenkammer oder aus einer Schleusenkammer in ein Netzwerk übernimmt. Entscheidend für die Erfindung ist, dass sich das in dem Schleusenelement verwendete dritte Protokoll derart von dem in dem Netzwerk, über das die Daten eingehen, verwendeten Protokoll unterscheidet, dass der dritte Rechner mittels Daten, die nach dem in dem Netzwerk, über das die Daten eingehen, verwendeten Protokoll übertragen werden, nicht manipuliert werden kann. Das Schleusenelement ist also auf eine Verarbeitung und Übertragung eingehender Daten gemäß dem dritten Protokoll ausgelegt und kann nach dem ersten und/oder zweiten Protokoll übertragene Daten nicht verstehen, verarbeiten oder übermitteln.

Es wird ferner vorgeschlagen, dass das erste Datenübertragungsprotokoll und das zweite Datenübertragungsprotokoll das gleiche Protokoll, vorzugsweise ein Standard-Protokoll wie bspw. TCP/IP (Transmission Control Protocol/ Internet Protocol), sind. Alternative Standard-Protokolle für das TCP (im sog. Transport-Layer) sind bspw. UDP oder SCTP. Alternative Standard-Protokolle für das IP (im sog. Network-Layer) sind bspw. ICMP, das OSPF (Open Shortest Path First)-Protokoll, BGP (Border Gateway Protocol), ARP oder RARP.

Im Gegensatz zu dem ersten und/oder zweiten Datenübertragungsprotokoll ist das dritte Datenübertragungsprotokoll kein bekanntes Standard-Protokoll, sondern ein gezielt für den Einsatz zur Datenübertragung in dem Schleusenelement entwickeltes proprietäres Datenübertragungsprotokoll. In dem dritten Datenübertragungsprotokoll werden die Daten vorzugsweise in der Anwendungsschicht in Dateneinheiten, die auch als Data Unit Containers bezeichnet werden können, übertragen. Die Datenübertragung in dem Schleusenelement erfolgt dabei vorzugsweise auf einer sehr niedrigen Schicht (des ISO/OSI-Schichtenmodells oder des TCP/IP-Referenzmodells), mit möglichst wenigen Header- bzw. Trailer Informationen. Das sind nämlich die Informationen, die von einem potentiellen Angreifer in erster Linie manipuliert werden. Durch eine Verringerung der manipulierbaren Informationen werden Sicherheitsattacken auf das Schleusenelement bzw. auf das sich dahinter verbergende Netzwerk nochmals deutlich erschwert.

Vorzugsweise werden die Daten in dem ersten und/oder zweiten Datennetzwerk als Datenpakete übertagen, wobei in das Schleusenelement eingehende Datenpakete zunächst gesammelt und zu Daten der Anwendungsschicht, sog. Applicaton Layer Daten, bspw. Netzwerk-Seiten, e-Mails, Datenbankinhalte, etc. zusammengesetzt. während die eingehenden Datenpakete also noch im sog. Network-Layer bzw. Transport-Layer übermittelt wurden, werden sie im Schleusenelement in den sog. Application-Layer gebracht, um bspw. ein effektives und zuverlässiges Scannen der Daten auf Viren o.ä. zu ermöglichen. Das Zusammensetzen der Datenpakete zu den ursprünglichen Daten erfolgt durch anwendungsspezifische Module (sog. Application Modules) in dem Schleusenelement. Diese erfüllen bspw. die Funktionalität eines Web-Browsers, der eingehende Datenpakete zu der ursprünglichen Netzwerk-Seite zusammensetzt oder eines eMail-Servers, der eingehende Datenpakete zu der ursprünglichen email zusammensetzt. wichtig ist, dass das Zusammensetzen der Datenpakete zu den ursprünglichen Daten und das Scannen der Daten auf Viren o.ä. - anders als bei bekannten Schutzsystemen oder -verfahren - noch in dem Schleusenelement, also noch bevor die Daten das abgesicherte Netzwerk erreichen, ausgeführt wird. Manipulierte Daten werden so sicher und zuverlässig am Zutritt zu dem Ziel-Netzwerk bzw. dem Ziel-Rechner gehindert.

Andererseits können infizierte Daten in dem Schleusenelement praktisch keinen Schaden anrichten, da Voraussetzung für eine Datenverarbeitung in dem Schleusenelement Kenntnis und Berücksichtigung des dort ausschließlich verwendeten dritten Datenübertragungsprotokolls ist. Diese Kenntnisse sind einem potentiellen Angreifer in aller Regel nicht bekannt und er hat auch keine Möglichkeit diese Kenntnisse von dem Schleusenelement abzufragen oder auf andere Weise zu erlangen.

Gemäß einer bevorzugten Ausführungsform der Erfindung umfassen die ersten Mittel zur Umwandlung der eingehenden Daten in das dritte Protokoll anwendungsspezifische Module (sog. Application Modules) auf, welche jeweils nur Daten eines bestimmten vorgebbaren Datentyps in Dateneinheiten gemäß dem dritten Datenübertragungsprotokoll umwandeln-Vorzugsweise sind für jeden Datentyp gesonderte anwendungsspezifische Module zur Umwandlung der Daten des vorgegebenen Datentyps in Dateneinheiten gemäß dem dritten Datenübertragungsprotokoll vorgesehen.

Der erste Rechner und der zweite Rechner sind jeweils als ganz normale Teilnehmer an das erste Datennetzwerk bzw. an das zweite Datennetzwerk angeschlossen und mit diesem verbunden. Der erste und der zweite Rechner stehen also über das erste bzw. das zweite Datennetzwerk mit externen Teilnehmern in Verbindung. Somit haben die anwendungsspezifischen Module des ersten bzw. zweiten Rechners die Möglichkeit, mit den externen Teilnehmern über das erste bzw. das zweite Protokoll, insbesondere über die Standard-Protokolle wie bspw. TCP/IP, UDP, etc., zu kommunizieren. In das Schleusenelement eingehend Daten bzw. Datenpakete können also nach bestimmten Ports durchsucht werden, um die Art der Anwendung der eingehenden Daten zu ermitteln, und zur Weiterverarbeitung an die entsprechenden anwendungsspezifischen Module des ersten bzw. zweiten Rechners weiterleitet werden (sog. mapping). Die Werte für die Ports sind in Protokoll Standards definiert.

Um welchen Datentyp es sich bei den eingehenden Daten bzw. Datenpaketen handelt, kann an der Nummer des Standard-Ports der eingehenden Datenpakete ermittelt werden. Ports sind Adresskomponenten, die in Netzwerkprotokollen eingesetzt werden, um Datenpakete den richtigen Diensten (Protokollen) zuzuordnen. Dieses Konzept ist z.B. in TCP, UDP und SCTP implementiert. In diesen drei Protokollen ist die Portnummer 16 Bit groß, d.h. sie kann Werte von 0 bis 65535 annehmen. Bestimmte Applikationen verwenden Portnummern, die ihnen von der IANA (Internet Assigned Numbers Authority) fest zugeordnet und allgemein bekannt sind. Sie liegen üblicherweise zwischen 0 und 1023, und werden als sog. Well Known Ports bezeichnet. Zwischen Port 1024 und 49151 befinden sich die sog. Registered Ports. Diese können bei Bedarf von Anwendungsherstellern für eigene Protokolle registriert werden, ähnlich wie Domainnamen. Das hat den Zweck, dass die Kommunikation im Netz nicht völlig unkoordiniert abläuft, wenn neue Anwendungen Datenpakete übermitteln. Die restlichen Ports bis Portnummer 65535 sind so genannte Dynamic und/oder Private Ports. Diese lassen sich variabel einsetzen, da sie nicht registriert und damit keiner Anwendung zugehörig sind.

Eine Standard-Port-Nummer 25 steht für eMail-Versand im SMTP-Dienst, eine Standard-port-Nummer 110 steht für eMail-Abholung in einem POP3-Diensz. Eine Standard-Port-Nummer 80 steht für Web-Seiten-Inhalte von einem Webserver im HTTP-Dienst, und eine Standard-Port-Nummer 20 steht für einen Dateitransfer (Dateitransfer vom Server zum Client) im FTP-Dienst. Der FTP-Dienst verwendet die Standard-Port-Nummer 21. Weitere Standard-Port-Nummern und die zugeordneten Anwendungen können dem Internet unter http://de.wikipedia.org/wiki/Standard-port entnommen werden.

Insbesondere sind in dem Schleusenelement anwendungsspezifische Module für mindesten einen der nachfolgenden Datentypen vorgesehen:
- Austausch von Dateien (FTP-File Exchange),
- Austausch von elektronischen Nachrichten (SMTP- bzw. POP3-Mail Exchange), und
- Synchronisation und Kopieren von Datenbankinhalten (Database Synchronization/ Replication).
Selbstverständlich können alternativ oder zusätzlich weitere anwendungsspezifische Module vorgesehen werden, welche speziell zur Verarbeitung der unterschiedlichsten Datentypen ausgelegt sind. Datenpakete, für die in dem Schleusenelement keine entsprechenden anwendungsspezifischen Module zum Zusammensetzen in die ursprünglichen Daten und zur Umwandlung in das dritte Protokoll vorhanden sind, werden von dem Schleusenelement zurückgewiesen und nicht verarbeitet. Durch die Beschränkung der Verarbeitung eingehender Daten auf bestimmte vorgebbare Datentypen kann ein zusätzlicher Sicherheitsgewinn erzielt werden. Diese Maßnahme kann auch als "application separation" bezeichnet werden.

Wie bereits erwähnt weist das Schleusenelement Mittel zum Durchsuchen der in dem Schleusenelement übertragenen Daten auf bestimmte Dateninhalte (z.B. Viren, Würmer, trojanische Pferde, etc.) auf, welche die Sicherheit und/oder ordnungsgemäße Funktion des Schleusenelements und/oder von Rechnern des Datennetzwerks, für das die Daten bestimmt sind, beeinträchtigen können. Das Scannen der Daten auf Viren o.ä. wird noch in dem Schleusenelement, also noch bevor die möglicherweise infizierten Daten das ziel-Netzwerk erreichen, ausgeführt und erfolgt in der Anwender-Ebene (Application Layer).

Während des Scannens der Daten auf Viren o.ä. ist das Schleusenelement besonders anfällig für Dnline-Axagxiffe. Aus diesem Grund wird vorgeschlagen, dass die Mittel zum Durchsuchen der eingehenden Daten auf Viren o.ä. nur aktiv sind, wenn die Verbindung zwischen dem Schleusenelement und dem Datennetzwerk, über das die zu übertragenden Daten eingehen, physikalisch unterbrochen ist. Anders ausgedrückt, wird der Virenscann-Vorgang ausschließlich während des Schaltintervalls ausgeführt, wenn keine Verbindung zwischen dem Schleusenelement und der Datenquelle vorliegt. Sobald also die Verbindung zu dem Netzwerk, aus dem ein Hackerangriff zu erwarten ist, aufgebaut ist, wird der virenscann-Vorgang unterbrochen. Dadurch ergibt sich nochmals ein zusätzlicher Sicherheitsgewinn, da die Datenquelle keinerlei Einfluss auf den Scannvorgang und dessen Ergebnis ausüben kann. Diese Sicherheitsfunktion wird auch als "Offline Scanning" bezeichnet.

Dem Schleusenelement ist ein externer Zeitgeber zur Vorgabe der zeitpunkte zum Umschalten des Schleusenelements zwischen dem ersten Rechner und dem zweiten Rechner zugeordnet. Der Zeitgeber ist als ein Hardware-Timer ausgebildet, um eine Manipulation des Zeitgebers zu erschweren. Bei dem aus der EDV bekannten Begriff "Hardware-Zeitgeber" oder auch "Hardware-Timer" handelt es sich um eine Einheit, die in der Regel als ein Bauteil ausgebildet ist und die zur Erzeugung, Steuerung und Überwachung von Prozessen und Taktsignalen dient. Der Hardware-Zeitgeber generiert ein periodisches bzw. zyklisches Signal, aus dem durch Umrechnen der Anzahl der Signale in Sekunden, Minuten und/oder Stunden eine zeitangabe abgeleitet wird. Hardware-Zeitgeber werden häufig als Echtzeit-Uhren in Computern oder zur Synchronisation von Netzwerken verwendet. Es wird also vorgeschlagen, dass die Umschaltzeitpunkte des Schaltelements nicht durch ein von außerhalb manipulierbares Rechengerät vorgegeben oder ausgelöst werden, sondern von dem Hardware-Zeitgeber, der unabhängig von dem Zustand des restlichen Schleusenelements arbeitet und von außerhalb nicht manipuliert werden kann. Wenn das Schleusenelement aktiviert wird (Power On), fängt der Hardware-zeitgeber unverzüglich an, ein periodisches oder zyklisches Taktsignal auszugeben und hört damit erst wieder auf, wenn das Schleusenelement heruntergefahren oder deaktiviert (Power Off) wird.

Der Hardware-Zeitgeber arbeitet ohne Software und ist deshalb von außerhalb des Schleusenelements, d.h. aus einem der Netzwerke heraus, nicht manipulierbar- Andere Taktfrequenzen des Zeitgebers können bspw. durch Austauschen eines Taktgenerators (bspw. eines Mikrocontrollers) in Form eines IC-Bauteils eingestellt werden. Als weitere Sicherheitsmaßnahme ist der Zeitgeber auf einer von den elektronischen Leiterplatten der übrigen Komponenten des Schleusenelements separaten elektronischen Leiterplatte angeordnet. Vorzugsweise ist die einzige Verbindung zwischen dem zeitgeber und dem Schaltelement des Schleusenelements eine Taktleitung (für jeden Schalter), über welche das Taktsignal von dem Zeitgeber zu dem Schaltelement übermittelt wird. Ein Zugriff und eine Manipulation des Timers ist damit praktisch ausgeschlossen.

Das Schaltelement weist mindestens einen mechanischen oder elektromechanischen Schalter auf, wobei jeder Schleusenkammer ein Schalter zugeordnet ist und der Hardware-Zeitgeber die Umschaltzeitpunkte des mindestens einen mechanischen Schalters vorgibt. Es werden keine elektronischen oder Halbleiter-Schalter eingesetzt, da diese bspw durch eine Starkstrom-Attacke von außerhalb angegriffen und in ihrer Funktionsfähigkeit und Zuverlässigkeit beeinträchtigt werden könnten. Mechanische bzw. elektromechanische Schalter, bspw. Relais, halten einer solchen Starkstrom-Attacke dagegen stand.

Das Schaltelement umfasst bspw. so viele mechanische bzw. elektromechanische Schalter wie Schleusenkammern in dem Schleusenelement vorgesehen sind. Im einfachsten Fall ist lediglich eine Schleusenkammer und auch nur ein mechanischer bzw. elektromechanischer Schalter vorgesehen ("SingleGate Lock Keeper"). Über das Schleusenelement von dem einen Netzwerk in das andere Netzwerk zu übertragende Daten werden zunächst aus dem einen Netzwerk über den Schalter in die Schleusenkammer übertragen und dort zwischengespeichert. Danach wird umgeschaltet und die Daten werden aus der Schleusenkammer in das andere Netzwerk übertragen. Die Datenübertragung in die umgekehrte Richtung erfolgt dem entsprechend, jedoch erst nachdem die Datenübertragung über das Schleusenelement in die erste Richtung abgeschlossen ist. Somit handelt es sich bei den Verbindungen zwischen der Schleusenkammer des Schleusenelements und dem ersten und zweiten Rechner jeweils um eine Duplex-Verbindung, die eine Datenübertragung in beide Richtungen erlaubt.

In einem anderen Fall ("DualGate Lock Keeper") sind zwei Schleusenkammern und zwei mechanische bzw. elektromechanische Schalter vorgesehen. Über das Schleusenelement von dem einen Netzwerk in das andere Netzwerk zu übertragende Daten können in der einen Richtung aus dem einen Netzwerk über den ersten Schalter in die erste Schleusenkammer übertragen und dort zwischengespeichert werden. Gleichzeitig können in der anderen Richtung Daten aus dem anderen Netzwerk über den zweiten Schalter in die zweite Schleusenkammer übertragen und dort zwischengespeichert werden. Danach werden die Schalter umgeschaltet, und die Daten aus der ersten Schleusenkammer werden über den ersten Schalter in das andere Netzwerk und die Daten aus der zweiten Schleusenkammer in das erste Netzwerk übertragen. Auf diese Weise kann eine gleichzeitige bidirektionale Datenübertragung in beide Richtungen über das Schleusenelement realisiert werden, obwohl die Verbindung zwischen den beiden Netzwerken ständig hardwaremäßig getrennt ist.

Zur Realisierung der vorliegenden Erfindung läuft auf dem ersten Rechner, dem zweiten Rechner und/oder auf dem mindestens einen dritten Rechner der Schleusenkammer ein Computerprogramm ab. Das Computerprogramm umfasst funktional gesehen im wesentlichen die anwendungsspezifischen Module zur Umwandlung der eingehenden Daten von dem in dem Ursprungs-Netzwerk verwendeten Protokoll in das Schleusenelement-interne dritte Protokoll bzw. zur Umwandlung der in dem Schleusenelement übertragenen Daten von dem dritten Protokoll in das in dem Ziel-Netzwerk verwendete Protokoll. Außerdem realisiert das Computerprogramm die Funktion der Module für die eigentliche Datenübertragung zwischen den Rechnern des Schleusenelements gemäß dem dritten Datenübertragungsprotokoll.

Besonders vorteilhaft ist es, wenn das Computerprogramm die Datenübertragung zwischen dem ersten Rechengerät und dem mindestens einen dritten Rechengerät und zwischen dem zweiten Rechengerät und dem mindestens einen dritten Rechengerät für Anwender und Anwendungen transparent steuert. Anwendungen oder Anwendungsprogramme, welche die Datenübertragung über das Schleusenelement veranlassen, bemerken die Anwesenheit des Schleusenelements nicht. Die Computerprogramme, die auf dem ersten Rechengerät und dem zweiten Rechengerät ablaufen, verstecken den aktuellen Verbindungszustand (Verbindung zwischen erstem/zweiten Rechner und drittem Rechner aufgebaut bzw. unterbrochen) gegenüber der Anwendung. Die Anwendungen übergeben die zu übertragenden Daten einfach an den ersten oder zweiten Rechner bzw. nehmen die übertragenen Daten von dem ersten oder zweiten Rechner in Empfang, so als wäre das Schleusenelement gar nicht vorhanden. Das auf dem ersten oder zweiten Rechner ablaufende Computerprogramm gibt den Anwendungen geeignete Rückmeldungen, um ihnen unabhängig von dem aktuellen Verbindungszustand eine ordnungsgemäße Datenübertragung zu signalisieren.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Rechnersystem mit einem erfindungsgemäßen Schleusenelement;
- Figur 2: eine schematische funktionale Darstellung des Schleusenelements aus Figur 1;
- Figur 3: einen schematischen Aufbau des erfindungsgemäßen Schleusenelements;
- Figur 4a und 4b: verschiedene Stellungen eines Schaltelements des erfindungsgemäßen Schleusenelements; und
- Figur 5: schematisch die Umwandlung der in das Schleusenelement eingehenden Daten in das dritte Datenübertragungsprotokoll.

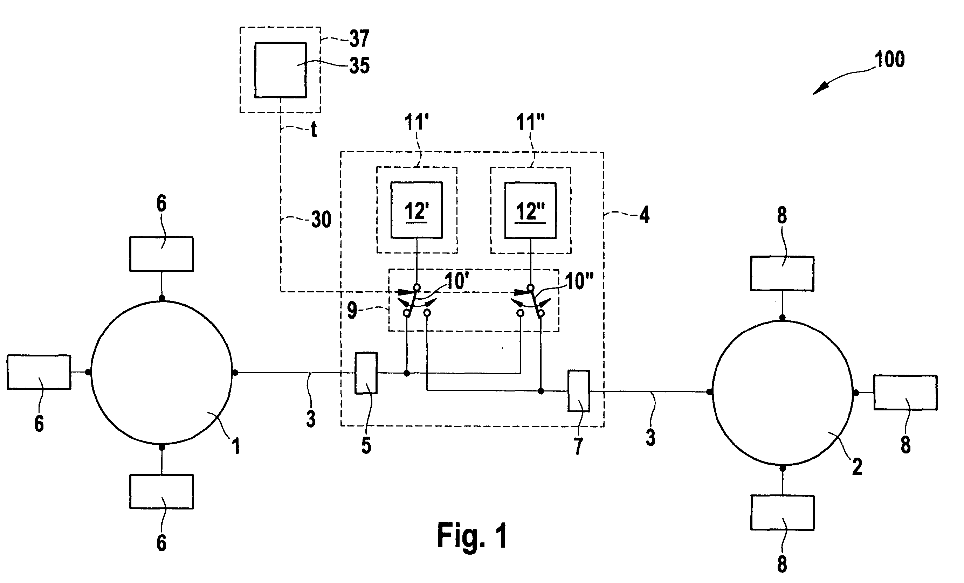

In Fig. 1 ist ein Rechnersystem in seiner Gesamtheit mit dem Bezugszeichen 100 bezeichnet. Es umfasst ein erstes Datennetzwerk 1 und ein zweites Datennetzwerk 2, die über eine Netzwerkverbindung 3 zum Zwecke einer Datenübertragung miteinander in Verbindung stehen. In der Netzwerkverbindung 3 ist ein erfindungsgemäßes Schleusenelement 4 angeordnet, durch das die Netzwerkverbindung 3 zu jedem Zeitpunkt, insbesondere während einer Datenübertragung zwischen dem ersten Netzwerk 1 und dem zweiten Netzwerk 2, hardwaremäßig d.h. physikalisch unterbrochen ist, so dass zu keiner zeit eine direkte Datenübertragungsverbindung oder ein direkter Datenübertragungskanal zwischen den beiden Netzwerken 1, 2 besteht.

Das erste Netzwerk 1 umfasst einen ersten Rechner 5 sowie weitere Rechner 6. Das zweite Netzwerk 2 umfasst einen zweiten Rechner 7 sowie weitere Rechner 8. Der erste Rechner 5 und der zweite Rechner 7 sind als Teil des Schleusenelements 4 ausgebildet. Das erste Netzwerk 1 ist bspw. ein internes unternehmensweites Rechnernetzwerk (sog. Intranet). Das zweite Netzwerk 2 ist bspw. das weltumspannende Internet, wobei die Rechner 8 bspw. Server des Internet sind.

Das Schleusenelement 4 weist ein hardwaremäßig realisiertes Schaltelement 9 auf, welches das Schleusenelement 4 wechselweise mit einem vorgebbaren Schalttakt von bspw. 30 Sekunden oder 1 Minute zwischen den beiden Netzwerken 1, 2 umschaltet. In dem dargestellten Ausführungsbeispiel ist das Schleusenelement 4 als ein sog. "DualGate Lock Keeper" ausgebildet, was dadurch erkennbar ist, dass das Schaltelemente 9 zwei mechanische bzw. elektromechanische Schalter 10', 10" bspw. in Form eines Relais aufweist. Ein mechanischer bzw. elektromechanischer Schalter 10 kann - im Gegensatz zu elektronischen oder Halbleiter-Schaltern - relativ hohen Strömen bzw. Spannungen standhalten, wie sie bspw. bei Höchspannimgs-Attacken auf das Schleusenelement 4 auftreten können.

Das Schaltelement 9 bzw. die Schalter 10', 10" werden zu vorgebbaren Zeitpunkten umgeschaltet. Ein entsprechendes Taktsignal t wird den Schaltern 10', 10" über eine Taktleitung 30 von einem Hardware-Zeitgeber 35 zugeführt. Der zeitgeber 35 ist auf einer von den elektrischen Leiterplatten (sog. PCB, Printed Circuit Boards) der anderen Komponenten des Schleusenelements 4 getrennten Leiterplatte 37 angeordnet und lediglich über die Taktleitung 30 mit dem Schleusenelement 4 verbunden, so dass ein zugriff auf den Zeitgeber 35 von dem Schleusenelement 4 aus ausgeschlossen ist. Selbst wenn ein zugriff auf irgend eine derzeit nicht ersichtliche Weise erfolgen sollte, könnte der Zeittakt t des Zeitgebers 35 nicht manipuliert werden, da der zeittakt t hardwaremäßig vorgegeben ist. Die umschaltzeitpunkte t des Schaltelements 9 bzw. der Schalter 10', 10" werden unabhängig von dem zustand des Schleusenelements 4 vorgegeben.

Das Schleusenelement 4 in Form des "DualGate Lock Keepers" uitfasst außerdem zwei Schleusenkammern 11', 11" zum Zwischenspeichern von Daten, die über die Datenverbindung 3 übertragen werden sollen. Die Schleusenkammern 11', 11" können mittels des Schaltelements 9 bzw. der mechanischen bzw. elektromechanischen Schalter 10', 10" zwischen zwei Stellungen umgeschaltet werden- In einer ersten Stellung (vgl. Fig. 1) steht die erste Kammer 11' mit dem ersten Netzwerk 1 und die zweite Kammer 11" mit dem zweiten Netzwerk 2 in Verbindung, wobei gleichzeitig die Verbindung zu dem jeweils anderen Netzwerk 2 bzw. 1 auf Hardware-Ebene unterbrochen ist. In einer zweiten Stellung steht die erste Kammer 11' mit dem zweiten Netzwerk 2 und die zweite Kammer 11" mit dem ersten Netzwerk 1 in Verbindung. Gleichzeitig ist die Verbindung zu dem jeweils anderen Netzwerk 1 bzw. 2 auf Hardware-Ebene unterbrochen. Ein direkter Durchgriff aus dem einen Netzwerk 2; 1 auf das andere Netzwerk 1; 2 wird so zuverlässig und sicher verhindert.

In den Schleusenkammern 11', 11" ist jeweils ein dritter Rechner 12', 12" angeordnet, der über das Schaltelement 9 bzw. den entsprechenden Schalter 10', 10" je nach Schalterstellung entweder mit dem ersten Netzwerk 1 bzw. dem ersten Rechner 5 oder mit dem zweiten Netzwerk 2 bzw. dem zweiten Rechner 7 in Verbindung steht. Bei dem erfindungsgemäßen Schleusenelement 4 ist selbst bei einem Angriff aus einem der Netzwerke 1, 2 heraus, bspw. auf eines der dritten Rechengeräte 12', 12", eine Manipulation des Schaltelements 9 und damit eine Beeinträchtigung der Funktion des Schleusenelements 4 sicher und zuverlässig ausgeschlossen.

Das wird unter anderem dadurch erreicht, dass die Umschaltzeiten für das Schaltelements 9 bzw. die Schalter 10', 10" nicht von Komponenten des Schleusenelements 4 (bspw. von den dritten Rechengeräten 12', 12"), die von außerhalb des Schleusenelements 4, bspw. aus den Netzwerken 1, 2 heraus, manipuliert werden können, sondern von dem hardwaremäßig realisierten zeitgeber (Hardware-Timer) 35 gesteuert bzw. vorgegeben werden. In Figur 1 ist deutlich zu erkennen, dass der Hardware-Timer 35 sowohl räumlich als auch funktional völlig unabhängig ist von den dritten Rechengeräten 12', 12".

Durch das Schleusenelement 4 kann ein Zugriff durch einen unbefugten Dritten, bspw von einem der Rechner 8 aus dem zweiten Netzwerk 2 heraus, auf das erste Netzwerk 1 wirksam verhindert werden. Dazu sind in dem erfinduzngsgemäßen Schleusenelement 4 verschiedene zusätzliche Schutzmechanismen vorgesehen, die insbesondere eine sog. "Protocol Isolation" und eine sog. "Application Separation" umfassen.

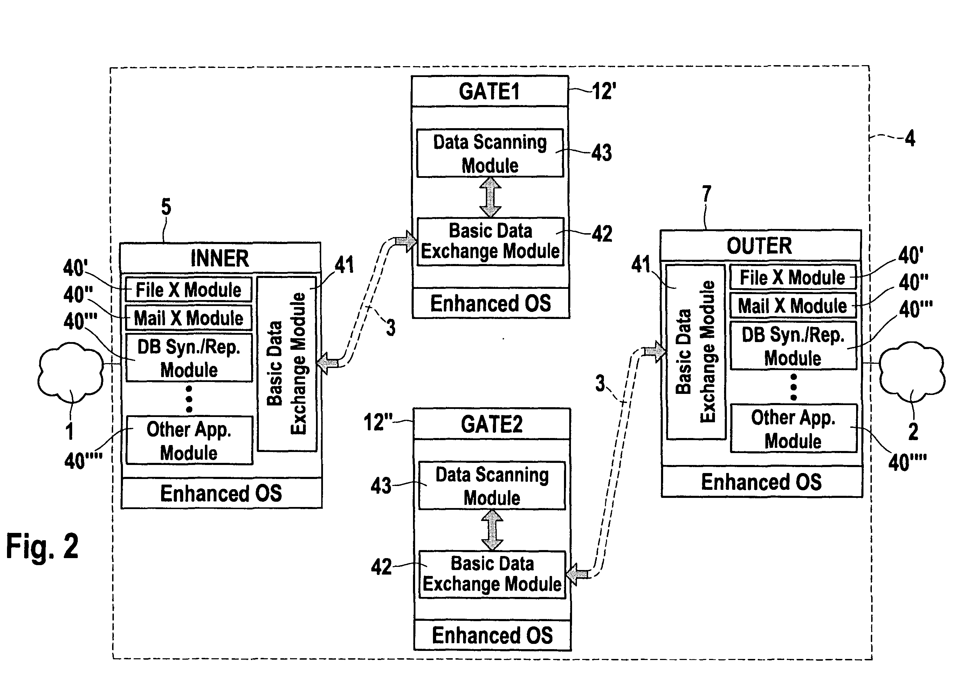

In Figur 2 ist eine schematische funktionale Darstellung des Schleusenelements 4 aus Figur 1 abgebildet. Dabei sind der erste Rechner 5 und der zweite Rechner 7 als Teil des Schleusenelements 4 ausgebildet. Obwohl die Rechner 5, 7 als Teil des Schleusenelements 4 ausgebildet sind, kann dennoch davon gesprochen werden, dass sie dem ersten Netzwerk 1 bzw. dem zweiten Netzwerk 2 zugeordnet sind. Der erste Rechner 5 kann mit den übrigen Rechnern 6 des Netzwerks 1 gemäß dem ersten Datenübertragungsprotokoll Daten austauschen. Ebenso kann der zweite Rechner 7 mit den übrigen Rechnern 8 des Netzwerks 2 gemäß dem zweiten Datenübertragungsprotokoll Daten austauschen. Der erste Rechner 1 ist als "Inner" bezeichnet, da er in dem Beispiel Teil eines internen abgesicherten Netzwerkes (z.B. eines Intranets) ist. Der zweite Rechner 2 ist als "Outer" bezeichnet, da er in dem Beispiel Teil eines externen Netzwerkes (z.B. des Internets) ist.

Das Schaltelement 9 mit den mechanischen bzw. elektromechanischen Schaltern 10', 10" ist in Figur 2 der besseren Übersichtlichkeit wegen nicht dargestellt. Es ist jedoch eine Datenverbindung 3 zwischen dem ersten und zweiten Rechner 5, 7 und den dritten Rechnern 12', 12" durch eine gestrichelte Linie angedeutet, welche der in Figur 1 dargestellten Stellung des Schaltelements 9 entspricht. In der anderen Stellung (in Figur 2 nicht dargestellt) des Schaltelements 9 würde die Datenverbindung 3 dann zwischen dem ersten Rechner 5 und dem unteren dritten Rechner 12" und zwischen dem oberen dritten Rechner 12' und dem zweiten Rechner 7 verlaufen.

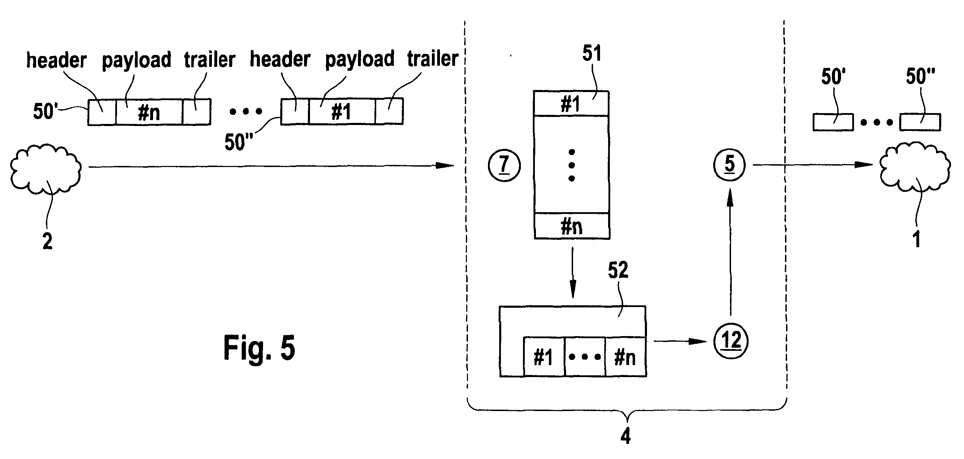

Die Daten in dem zweiten Datennetzwerk 2 werden nach einem Standard-Datenübertragungsprotokoll, bspw. in Form von Datenpaketen nach dem TCP/IP (vgl. Bezugszeichen 50', 50" in Figur 5), übermittelt. Über diese Protokoll gelangen die Daten auch an den zweiten Rechner 7. In dem zweiten Rechner 7 sind erste Mittel 40 in Form von anwendungsspezifischen Modulen (sog. Application Modules) vorgesehen, welche von dem zweiten Datennetzwerk 2 eingehende Datenpakete 50', 50" sammeln und zu den Daten in der Anwendungsschicht (vgl. Bezugszeichen 51 in Figur 5) zusammensetzen. Die zusammengesetzten Daten 51 werden dann in ein drittes Datenübertragungsprotokoll umgewandelt, d.h. in Dateneinheiten (sog. Data Unit Containers) verpackt (vgl. Bezugszeichen 52 in Figur 5). Vorzugsweise wird die zusammengesetzte Datei in der Anwendungsschicht nicht mehr unterteilt, sondern als ganzes in einer Dateneinheit 52 verpackt und als solche in dem Schleusenelement 4 übertragen.

Für verschiedene Datentypen bzw. Anwendungen gibt es in dem Rechner 7 eigene anwendungsspezifische Module 40. So ist bspw. ein Modul 40' für den Datenaustausch (File Exchange), ein Modul 40" für den Nachrichtenaustausch (Mail Exchange), ein Modul 40'" für Synchronisations- und Kopiervorgänge von Datenbankinhalten (Database Synchronizatianl Replication), und ein Modul 40"" für eine oder mehrere bestimmte andere Anwendungen vorgesehen. Eingehende Daten werden also anwendungsabhängig von bestimmten Ports, die in Protokoll Standards spezifiziert sind, auf ein entsprechendes Modul 40 gemappt. Selbstverständlich ist es denkbar, dass ein Modul 40 auch Daten von mehreren verschiedenen Anwendungen verarbeitet. Wichtig ist aber, dass jedem Modul 40 eine mehrere bestimmte Anwendungen zugeordnet sind, so dass in das Schleusenelement 4 eingehende Daten von Anwendungen, für die kein Modul 40 vorgesehen ist, von dem Rechner 7 nicht verarbeitet werden. Daten dieser Anwendungen wird also der zugang zu dem Schleusenelement verwehrt. Dieser Sicherheitsmechanismus wird auch als "Application Separation" bezeichnet.

Die verschiedenen Datentypen werden von dem Rechner 7 anhand des Werts des Standard Data Ports der eingehenden Datenpakete erkannt. Jedes Modul 40 verarbeitet ausschließlich Daten des Datentyps bzw. der Anwendung, für den bzw. die das Modul 40 vorgesehen ist. Falls für eingehende Datenpakete eines bestimmten Datentyps bzw. einer bestimmten Anwendung kein entsprechendes anwendungsspezifisches Modul 40 vorhanden ist, werden die Daten zurückgewiesen.

Mittels eines Datenaustauschmoduls 41 (sog. "Basic Data Exchange Module") werden die Dateneinheiten 52 dann an den dritten Rechner 12" übermittelt. Dort ist ein entsprechendes Datenauscauschmodul 42 vorgesehen, welches die nach dem dritten Übertragungsprotokoll übertragenen Dateneinheiten 52 empfängt und zwischenspeichert. Die Dateneinheiten 52 werden von Mitteln 43 zum Durchsuchen der Daten nach Viren, Trojanischen Pferden, Würmern o.ä. (sog. "Data Scanning Module") in der Anwendungsschicht durchsucht. So können infizierte oder verseuchte Daten vor der Weiterleitung an das interne Netzwerk 1 gesäubert werden, oder eine Weiterleitung von infizierten, oder verseuchten Daten wird komplett verhindert.

In entsprechender Weise erfolgt gleichzeitig oder zumindest teilweise zeitlich versetzt zu der beschriebenen Datenübertragung zwischen dem zweiten Rechner 7 und dem unteren dritten Rechner 12" eine Datenübertragung zwischen dem oberen dritten Rechner 12' und dem ersten Rechner 5 des abgesicherten Netzwerks 1. Die Daten, die nun von dem dritten Rechner 12' an den ersten Rechner 5 übertragen werden, wurden in einem vorangegangenen Arbeitstakt bzw. Umschalttakt t des Schaltelements 9 in der oben beschriebenen Weise von dem zweiten Rechner 7 an den dritten Rechner 12' übertragen. Ebenso werden in einem nachfolgenden Arbeitstakt bzw. Umschalttakt des Schaltelements 9 die in dem dritten Rechner 12" zwischengespeicherten Daten an den ersten Rechner 5 übertragen. Auf diese Weise werden Daten aus dem Internet 2 über das Schleusenelement 4 an das geschützte Intranet 1 übertragen, obwohl zu keinem Zeitpunkt eine direkte Datenverbindung bzw. ein direkter Datenübertragungskanal zwischen den beiden Netzwerken 1, 2 besteht.

Selbstverständlich ist die Datenübertragung zwischen den Rechnern 1, 2 und den dritten Rechnern 12', 12" in beide Richtungen möglich. Zum einen ist es denkbar, dass zeitgleich mit der oben beschriebenen Datenübertagung von dem zweiten Rechner 7 zu dem unteren dritten Rechner 12" Dateneinheiten 52, die in dem vorangegangenen Schalttakt t der Schalter 10', 10" von dem zweiten Rechner 7 zu dem dritten Rechner 12' übertragen wurden, nunmehr von dem dritten Rechner 12' an den ersten Rechner 5 und weiter an das erste Netzwerk 1 übermittelt werden. Zum anderen ist es denkbar, dass zeitgleich mit der oben beschriebenen Datenübertagung von dem zweiten Rechner 7 zu dem dritten Rechner 12" Dateneinheiten 52 von dem ersten Rechner 5 in Richtung des oberen dritten Rechners 12' übermittelt werden, um sie dann in dem nachfolgenden Schalttakt t der Schalter 10', 10" von dem dritten Rechner 12' zu dem zweiten Rechner 7 und weiter an das zweite Netzwerk 2 übertragen zu können.

Im nächsten Schalttakt t verbinden die Schalter 10', 10" den dritten Rechner 12' mit dem zweiten Rechner 7 und den dritten Rechner 12" mit dem ersten Rechner 5. Nunmehr werden die in dem dritten Rechner 12" gespeicherten Daten wieder in die Dateneinheiten 52 verpackt (falls sie nicht schon in den Dateneinheiten 52 zwischengespeichert wurden) und durch das Datenaustauschmodul 42 gemäß dem dritten Datenübertragungsprotokoll an ein Datenaustauschmodul 41 des ersten Rechners 5 übertragen. Die Dateneinheiten 52 werden an das dem Datentyp bzw. der Anwendung entsprechende anwendungsspezifische Modul 40 des erste Rechners 5 weitergeleitet. Dort werden die Daten wieder zu den Daten n der Anwendungsschicht aus den Dateneinheiten 52 entnommen und in die Datenpakete gemäß dem ersten Datenübertragungsprotokoll, das in dem ersten Netzwerk 1 eingesetzt wird, unterteilt. In der Regel sind das erste und das zweite Protokoll identisch, so dass in dem vorliegenden Beispiel die Daten wieder in Datenpakete gemäß dem verwendeten TCP/IP umgewandelt werden. Anschließend werden die Daten weiter an das erste Netzwerk 1 bzw. an den entsprechenden Zielrechner 6 im ersten Netzwerk 1 weitergeleitet.

Die von dem zweiten Netzwerk 2 an das erste Netzwerk 1 zu übertragenden Daten werden also am Eingang des Schleusenelements 4 von den ersten Mitteln (den anwendungsspezifischen Modulen 40 des zweiten Rechners 7) von dem in dem zweiten Netzwerk 2 verwendeten zweiten Datenübertragungsprotokoll in das in dem Schleusenelement 4 intern verwendete dritte Datenübertragungsprotokoll und am Ausgang des Schleusenelements 4 von den zweiten Mitteln (den anwendungsspezifischen Modulen 40 des ersten Rechners 5) von dem in dem Schleusenelement 4 intern verwendeten dritten Datenübertragungsprotokoll in das in dem ersten Netzwerk 1 verwendete erste Datenübertragungsprotokoll umgewandelt. In der entgegengesetzten Richtung werden die von dem ersten Netzwerk 1 an das zweite Netzwerk 2 zu übertragenden Daten am Eingang zu dem Schleusenelement 4 von den ersten Mitteln (den anwendungsspezifischen Modulen 40 des ersten Rechners 5) von dem in dem ersten Netzwerk 1 verwendeten ersten Datenübertragungsprotokoll in das in dem Schleusenelement 4 intern verwendete dritte Datenübertragungsprotokoll und am Ausgang des Schleusenelements 4 von den zweiten Mitteln (den anwendungsspezifischen Modulen 40 des zweiten Rechners 7) von dem in dem Schleusenelement 4 intern verwendeten dritten Datenübertragungsprotokoll in das in dem zweiten Netzwerk 2 verwendete zweite Datenübertragungsprotokoll umgewandelt. Die Verwendung des speziellen Protokolls in dem Schleusenelement 4 wird auch als "Protocol Isolation" bezeichnet. Durch diese Sicherheitsmaßnahme können auf Standard-Protokolle (z.B. TCP/IP) basierende Angriffe auf das Schleusenelement 4 bzw. auf das geschützte Netzwerk 1 abgeblockt werden, da das Standard-Protokoll in dem Schleusenelement 4 nicht verstanden wird, weil dort ein anderes Protokoll zum Einsatz kommt. Das Standard-Protokoll wird beim Betreten des Schleusenelements 4 angehalten oder abgeblockt, indem in dem Schleusenelement ein anderes Protokoll zur Datenübertragung verwendet wird. Die meisten Attacken, die auf wunde Punkte des TCP gerichtet sind, können in dem Schleusenelement nicht funktionieren.

Durch die "Protocol Isolation" wird also eine Datenverbindung mit eingehenden Daten auf der Transport- bzw. Netzwerkschicht ("Transport Layer", "Network Layer") des OSI/ISO-Schichtermodells unterbrochen. Durch die "Application Separation" erfolgt zusätzlich noch eine Trennung auf der Anwendungsschicht.

Eine übergeordnete Anwendung, welche die Datenübertragung zwischen den Netzwerken 1, 2 veranlasst hat, erkennt nicht, dass die Daten nicht direkt, sondern mittelbar über das Schleusenelement 4 übermittelt wurden. Die Datenübertragung ist also vollkommen transparent. Nur dann geben die übergeordneten Anwendungsprogramme, welche die Datenübertragung zwischen den Netzwerken 1, 2 veranlasst haben, keine Fehlermeldung aus und arbeiten ordnungsgemäß als würden sie Daten über eine ganz normale Netzwerkverbindung ohne ein dazwischen geschaltetes Schleusenelement 4 übertragen.

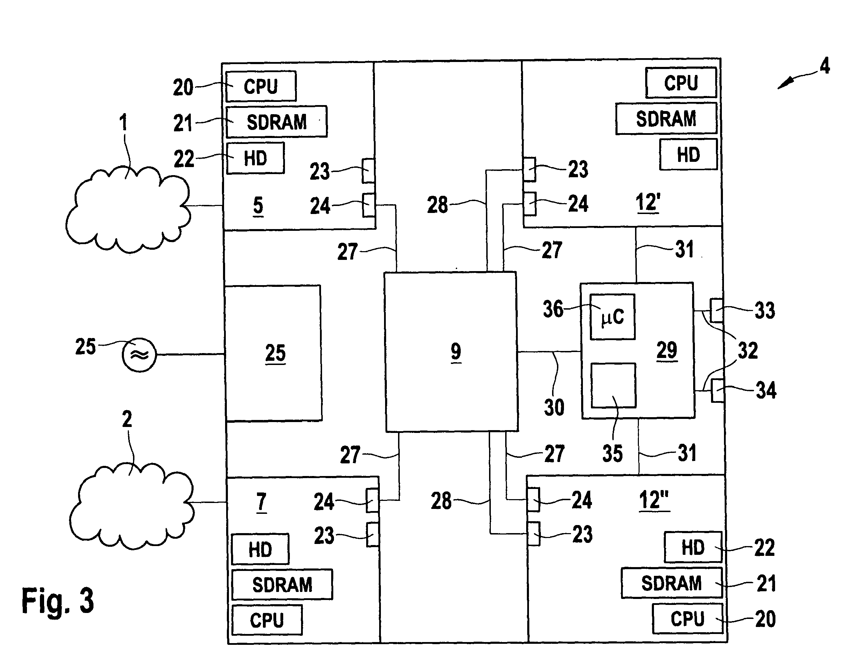

In Figur 3 ist das erfindungsgemäße Schleusenelement 4 in einem schematischen Aufbau dargestellt. Das Schleusenelement 4 umfasst ein Chassis, in dem verschiedene Komponenten des Schleusenelements 4 als Einsteckkarten angeordnet sind. Der schematische Aufbau aus Figur 3 entspricht nicht der tatsächlichen Anordnung der verschiedenen Einsteckkarten in dem Chassis.

Das dargestellte und nachfolgend erläuterte Ausführungsbeispiel des Schleusenelements 4 umfasst vier sogenannte single board Computer (SBC)-Systeme, die jeweils einen Mikroprozessor (CPU) 20, einen Arbeitsspeicher (SDRAM) 21 und einen Massenspeicher (HD) 22 in Form eines Festplattenspeichers aufweisen. Außerdem verfügt jedes der SBC-Systeme über eine parallele Schnittstelle 23 und eine Netzwerkkarte 24. Die SBC-Systeme entsprechen den Rechengeräten 5, 7, 12, wobei das in Figur 3 dargestellte Ausführungsbeispiel zwei dritte Rechengeräte 12', 12" und somit auch (in Figur 3 allerdings nicht dargestellt) zwei Schleusenkammern 11', 11" und zwei mechanische bzw. elektromechanische Schalter 10', 10" umfasst. Jedes der SBC-Systeme ist auf einer eigenen Leiterplatte, einem sog. printed circuit board (PCB), ausgebildet.

Das SBC-System oben links entspricht dem ersten Rechengerät 5, das mit dem ersten Netzwerk 1 in Verbindung steht. Das SBC-System unten links entspricht dem zweiten Rechengerät 7, das mit dem zweiten Netzwerk 2 in Verbindung steht. Die beiden SBC-Systeme rechts in Figur 3 entsprechen jeweils einem dritten Rechengerät 12', 12". Der Vorteil der Ausführungsform mit zwei Schleusenkammern 11', 11", zwei dritten Rechengeräten 12', 12" und zwei mechanischen bzw. elektromechanischen Schaltern 10', 10" ist darin zu sehen, dass Daten nahezu zeitgleich in beide Richtungen über das Schleusenelement 4 übertragen werden können. Beide Schalter 10', 10" des Schaltelements 9 können zwischen den zwei genannten Stellungen hin- und hergeschaltet werden.

Bei dem in Figur 3 dargestellten Ausführungsbeispiel werden die mechanischen bzw. elektromechanischen Schalter 10', 10" des Schaltelements 9 nun genau entgegengesetzt zueinander angesteuert, so dass wenn der eine Schalter 10' in der ersten Stellung ist, sich der andere Schalter 10" in der zweiten Stellung befindet und umgekehrt. Auf diese Weise können zur gleichen Zeit Daten aus dem ersten Netzwerk 1 in die erste Schleusenkammer 11' und aus dem zweiten Netzwerk 2 in die zweiten Schleusenkammer 11" übertragen werden. Nach dem umschalten der Schalter 10', 10" können dann ebenfalls zeitgleich die Daten aus der ersten Schleusenkammer 11' an das zweite Netzwerk 2 und die Daten aus der zweiten Schleusenkammer 11" an das erste Netzwerk 1 übertragen werden. Selbstverständlich ist es theoretisch auch denkbar, die beiden mechanischen bzw. elektromechanischen Schalter 10', 10" parallel oder quasiparallel zueinander anzusteuern, so dass die beiden Schleusenkammern 11', 11" bzw. die beiden darin angeordneten dritten Rechengeräte 12', 12" zumindest teilweise zeitgleich mit dem ersten Netzwerk 1 bzw. dem darin angeordneten ersten Rechengerät 5 und nach dem Umschalten ebenfalls zumindest teilweise zeitgleich mit dem zweiten Netzwerk 2 bzw. dem darin angeordneten zweiten Rechengerät 7 verbunden sind.

Das Schleusenelement 4 verfügt außerdem über eine Spannungsversorgung 25, die einerseits an ein Spannungsnetz 26 und andererseits zur Energieversorgung über das Chassis an sämtliche Komponenten bzw. die Leiterplatten des Schleusenelements 4 angeschlossen ist. Die Anschlussleitungen zwischen der Spannungsversorgung 25 und den Komponenten des Schleusenelements 4 sind der besseren Übersichtlichkeit halber in Figur 3 nicht dargestellt.

Das Schaltelement 9 ist bei dem in Figur 3 dargestellten Ausführungsbeispiel auf einer gedruckten Leiterplatte, einem sogenannten printed circuit board (PCB), ausgebildet. Das Schaltelement 9 steht über eine Datenübertragungsverbindung in Form eines Netzwerkkabels 27 mit sämtlichen SBC-Systemen 5, 7 und 12', 12" in Verbindung, wobei das Netzwerkkabel 27 an die Netzwerkkarten 24 der SBC-Systeme 5, 7, 12', 12" angeschlossen ist. Über die Netzwerkkabel 27 werden die über das Schleusenelement 4 zu übertragenden Daten in Abhängigkeit von der Stellung der Schalter 10', 10" des Schaltelements 9 zwischen bestimmten SBC-Systemen 5, 7, 12', 12" gemäß dem dritten Datenübertragungsprotokoll übertragen. Des Weiteren steht das Schaltelement 9 über Statusverbindungen in Form paralleler 9-poliger Kabel 28 mit den SBC-Systemen 12', 12" in Verbindung, wobei die parallelen Kabel 28 an die parallelen Schnittstellen 23 der SBC-Systeme 12', 12" angeschlossen sind. zwischen den SBC-Systemen 5, 7 und dem Schaltelement 9 sind in dem dargestellten Ausführungsbeispiel aus Sicherheitsgründen (um einen Angriff auf das Schleusenelement 4 bzw. das Schaltelement 9 oder eine Manipulation der Elemente 4, 9 von außerhalb zu verhindern) keine Statusverbindungen 28 vorgesehen. Über die parallelen Kabel 28 erhalten die SBG-Systeme 12 Informationen über den aktuellen zustand des Schaltelements 9, insbesondere über den aktuellen Schaltzustand der Schalter 10', 10". Entsprechend dem Schaltzustand der Schalter 10', 10" können die Mittel 43 zum Scannen der eingegangenen Daten in der Anwendungsschicht angesteuert, insbesondere aktiviert bzw. deaktiviert werden.

Schließlich umfasst das Schleusenelement 4 eine ebenfalls als gedruckte Leiterplatte (PCB) ausgebildete Einheit 29, die über eine Signalisierungsleitung 30 an das Schaltelement 9 angeschlossen ist. Über die Signalisierungsleitung 30 können Signale z. B. nach dem sogenannten Firewire-Standard übertragen werden. Aus diesem Grund wird die Signalisierungsleitung 30 in dem in Figur 3 dargestellten Ausführungsbeispiel auch als Firewire-Kabel bezeichnet.

Die Einheit 29 ist über zwei serielle 9-polige Kabel 31 an die beiden dritten Rechengeräte 12', 12" angeschlossen. Über die seriellen Kabel 31 wird der aktuelle Zustand der Schleusenkammern 11', 11" bzw. der dritten Rechengeräte 12', 12" an die Einheit 29 übertragen. Des Weiteren sind zwei serielle 15-polige Kabel 32 vorgesehen, über die die Einheit 29 mit von außerhalb des Schleusenelements 4 einsehbaren Leuchtdioden (LEDs) 33, 34 oder einer Flüssigkristallanzeige (LCD) in Verbindung steht. Mit Hilfe der LEDs 33, 34 bzw. der LCD wird einem Anwender der aktuelle zustand des Schleusenelements 4, insbesondere der aktuelle Schaltzustand des Schaltelements 9 bzw. der Schalter 10', 10" und der Schleusenkammern 11', 11", und/oder der dritten Rechengeräte 12', 12" mitgeteilt.

Schließlich gibt es bei dem Schleusenelement 4 noch vier IDE-Kabel, mit denen die Festplatten (HD) 22 der SBC-Systeme 5, 7, 12', 12" mit der Hauptplatine des jeweiligen SBC-Systems 5, 7, 12' , 12", dem sogenannten SBC-Motherboard, verbunden sind, was in Figur 3 jedoch nicht explizit dargestellt ist.

Die Einheit 29 hat insbesondere zwei Funktionen: Zum einen soll sie Informationssignale zur Ansteuerung der LEDs 33, 34 bzw. LCD generieren und über die seriellen Kabel 32 an diese übermitteln, um Anwender über den aktuellen Status des Schleusenelements 4 zu informieren. Zum anderen wird in der Einheit 29 das Taktsignal t, in dem vorliegenden Ausführungsbeispiel ein TTL-Signal, zur Ansteuerung des Schaltelements 9 bzw. der elektromechanischen Schalter 10', 10" generiert und über das Firewire-Kabel 30 an diese übermittelt.

Zum Generieren des Taktsignals t ist in der Einheit 29 der Hardware-Zeitgeber 35, der sogenannte Hardware-Timer, vorgesehen, der unabhängig von dem aktuellen zustand der Komponenten des Schleusenelements 4, insbesondere unabhängig von den dritten Rechengeräten 12', 12", die Umschaltzeitpunkte für das Schaltelement 9 bzw. die Schalter 10', 10" vorgibt. Außerdem ist ein Mikro-Controller 36, in dem vorliegenden Ausführungsbeispiel vom Typ PIC..., beispielsweise PIC16C63A oder PIC12C509A, von der Firma Microchip Technology Inc., 2355 West Chandler Boulevard, Chandler, Arizona, USA 85224-6199 vorgesehen, auf dem u. a. ein einfaches Assembler-Programm ablauffähig ist. Bestimmte variablen oder Parameter für den Hardware-Zeitgeber 35 können in dem Assembler-Programm eingestellt werden, so dass der Hardware-Zeitgeber 35 ein gewünschtes Ansteuersignal t (TTL-Signal) zum Triggern des Schaltelements 9 erzeugt. Die Initialisierung und Kalibrierung des Hardware-Zeitgebers 35 durch Anpassen der Parameter bzw. variablen in dem Assembler-Programm kann nur ein einziges Mal erfolgen, da ein interner Speicher des Mikro-Controllers 36 lediglich eine einmalige Programmierung erlaubt. Eine nachfolgende Änderung der Variablen bzw. Parameter durch Umprogrammieren des internen Speichers des Mikro-Controllers 36 ist nicht möglich. Dies ist bauartbedingt bei dem verwendeten Typ von Mikro-Controller 36 vorgegeben.

Außer dem genannten Mikro-Controller-Typ gibt es noch andere Typen, die sich ebenfalls zum Einsatz in einem erfindungsgemäßen Schleusenelement 4 eignen würden, hier aber nicht explizit genannt sind. Vorzugsweise erfolgt die Kalibrierung und Initialisierung des Hardware-Zeitgebers 35 beim Hersteller des Schleusenelements 4 noch bevor das Schleusenelement 4 an den Kunden ausgeliefert wird (prior to shipment and use). Durch den Einsatz eines Mikro-Controllers 36 mit einem nur ein einziges Mal programmierbaren internen Speicher geht zwar Flexibilität verloren, es stellt aber einen enormen Sicherheitsgewinn dar, da eine Manipulation des Zeitgebers 35 bzw. des Schaltelements 9 durch einen Angriff aus einem der Netzwerke 1, 2 ausgeschlossen ist.

Obwohl bei dem erfindungsgemäßen Schleusenelement 4 das auf dem Mikro-Controller 36 der Einheit 29 ablaufende Assembler-Programm zur Initialisierung und/ oder Kalibrierung des Zeitgebers 35 verwendet wird, handelt es sich doch um einen reinen Hardware-Zeitgeber 35, der von außerhalb des Schleusenelements 4 nicht manipulierbar ist. Das Assembler-Programm dient nämlich lediglich dazu, eine bestimmte Anzahl (beispielsweise vier) Variablen oder Parameter des Hardware-Timers 35 einstellen zu können, so dass das Schaltelement 9 bzw. die Schalter 10', 10" eine gewünschte, vorgebbare Schaltcharakteristik, insbesondere bestimmte Umschaltzeiten, aufweisen. Die gewünschten Werte für die Variablen bzw. Parameter werden in dem Assembler-Programm eingestellt und das überarbeitete Programm in den internen Speicher des Mikro-Controllers 36 gespeichert. Danach ist die Initialisierung bzw. Kalibrierung abgeschlossen. Im Anschluss daran ist eine Umprogrammierung des Mikro-Controllers 36 zur Veränderung der Taktzeiten des Hardware-Timers 35 und der Schaltcharakteristik des Schaltelements 9 überhaupt nicht bzw nur mit einem extrem hohen Aufwand, bspw. durch Austauschen kompletter elektrischer Bauelemente (Ics), möglich. Jedenfalls ist eine Umprogrammierung des Mikro-Controllers 36 im Rahmen eines Angriffs von außerhalb des Schleusenelements 4 mit Sicherheit ausgeschlossen.

Die in dem in Figur 3 dargestellten Schleusenelement 4 gewählte Ausführungsform, bei der der Hardware-Zeitgeber 35 außerhalb des Schaltelements 9 in der Einheit 29 auf einem separaten PCB angeordnet ist, hat den Vorteil, dass das Schaltelement 9 völlig frei von zusätzlicher Hardware und Software gehalten wird und tatsächlich nur als unmanipulierbares ausführendes Schaltorgan dient. Es ist jedoch selbstverständlich möglich, den Hardware-Zeitgeber 35 und/oder den Mikro-Controller 36 innerhalb des Schaltelementes 9 anzuordnen. In diesem Fall würden über das Firewire-Kabel 30 keine Taktsignale mehr für das Schaltelement 9, sondern in umgekehrter Richtung Informationen über den aktuellen Zustand des Schaltelements 9 bzw. der mechanischen bzw. elektromechanischen Schalter 10', 10" an die Einheit 29 übermittelt, so dass diese die Leuchtdioden 33, 34 entsprechend ansteuern kann. Falls auf eine Information der Anwender über den aktuellen Zustand des Schleusenelements 4 über die beiden Leuchtdioden 33, 34 verzichtet werden kann, könnte dann auf die Einheit 29, das Firewire-Kabel 30, die seriellen Kabel 31 und die seriellen Kabel 32, sowie auf die Leuchtdioden 33, 34 völlig verzichtet werden.

Der Hardware-Timer 35 ist in der Regel aus Platz- und Kostengründen integraler Bestandteil des Mikro-Controllers 36. In Figur 3 sind beide Komponenten 35, 36 lediglich zum besseren Verständnis der Erfindung als separate Bauteile dargestellt. Des weiteren ist es möglich, nicht nur - wie in Figur 3 dargestellt - einen Mikro-Controller 36, sondern mehrere Mikro-Controller, beispielsweise so viele Mikro-Controller wie das Schleusenelement 4 dritte Rechengeräte 12', 12" aufweist, vorzusehen. Außerdem ist es denkbar, außer der genannten verbindungsarten auch andere Arten von Verbindungen zwischen den Komponenten 5, 7, 9, 12', 12" des Schleusenelements 4 vorzusehen.

zur Erfüllung der sogenannten Display-Funktion (Ausgabe des Status des Schaltelements 9 und der Rechengeräte 12', 12" über die LEDs 33, 34) kann in der Einheit 29 mindestes ein zusätzlicher Mikrocontroller (beispielsweise vom Typ PIC16C63A) vorgesehen sein, der in Figur 3 jedoch nicht dargestellt ist. Vorzugsweise sind zwei zusätzliche Mikro-Controller für die Display-Funktion vorgesehen.

während des Betriebs des Schleusenelements 4 läuft auf dem Mikroprozessor (CPU) 20 eines jeden der SBC-Systeme 5, 7, 12', 12" ein Computerprogramm ab, welches je nach Stellung der Schalter 10', 10" die Datenübertragung zwischen den SBC-Systemen steuert. Das Computerprogramm ist beispielsweise auf der Festplatte (HD) 22 der Komponenten 5, 7, 12', 12" abgespeichert und wird nach dem Einschalten des Schleusenelements 4 in den Arbeitsspeicher 21 und von dort entweder als Ganzes oder befehlsweise zur Abarbeitung in den Prozessor 20 der Komponenten 5, 7, 12', 12" übertragen. Funktional gesehen erfüllt das Computerprogramm die Aufgaben der anwendungsspezifischen Module 40 des ersten und des zweiten Rechners 5; 7, der Datenübertragungsmodule 41 des ersten und des zweiten Rechners 1, 2 und der Datenübertragungsmodule 42 der dritten Rechner 12', 12". Auch die Funktion der Datenscannmodule 43 der dritten Rechner 12', 12" kann von dem Computerprogramm erfüllt werden.

Die kommunikationstechnischen Voraussetzungen für eine Datenübertragung über das Schleusenelement 4 gemäß dem dritten Übertragungsprotokoll werden ausschließlich von den auf den einzelnen dritten Rechengeräten 12', 12" ablaufenden Computerprogrammen initiiert und im zusammenspiel mit den auf den Rechengeräten 5 oder 7 ablaufenden Computerprogrammen erfüllt. Auch der eigentliche Datenaustausch zwischen den Rechengeräten 12', 12" und 5 oder 7 erfolgt mit Hilfe der Computerprogramme ausschließlich auf Initiative der dritten Rechner 12', 12". Dadurch ergibt sich ein besserer Schutz vor Online-Angriffs- oder Manipulationsversuchen auf das abgesicherte Netzwerk 1 aus dem zweiten Netzwerk 2 heraus.

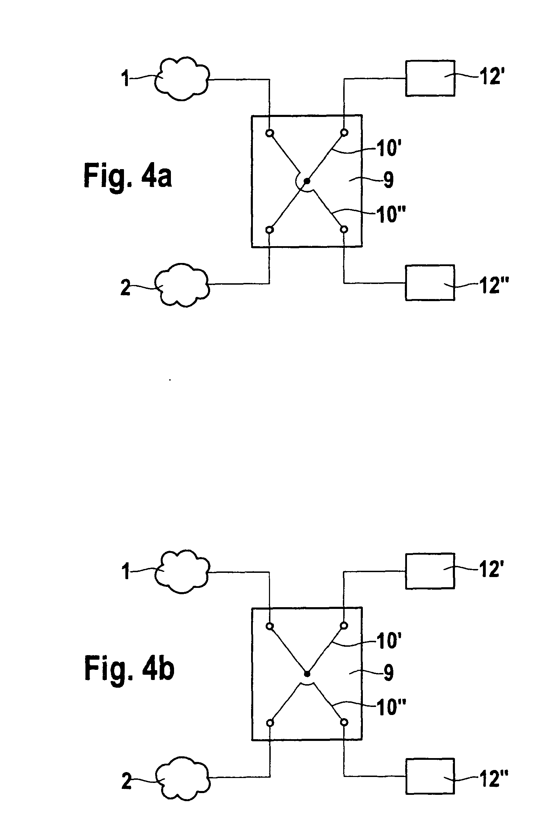

In Figur 4a ist das Schaltelement 9 aus Figur 3 mit den beiden Schaltern 10', 10" im Detail in einer ersten Stellung dargestellt. Dabei ist der erste Schalter 10' in einer Stellung, in der die erste Schleusenkammer 11' bzw. das darin angeordnete dritte Rechengerät 12' mit dem zweiten Netzwerk 2 verbunden ist. Der zweite Schalter 10" befindet sich dagegen in einer Stellung, in der die zweite Schleusenkammer 11" bzw das darin angeordnete dritte Rechengerät 12" mit dem ersten Netzwerk 1 in Verbindung steht. Wenn nun das Schaltelement 9 auf Befehl des Zeitgebers 35 umgeschaltet wird, kommen die Schalter 10' und 10" in die in Figur 4b dargestellte Stellung. Dabei befindet sich der erste Schalter 10' in einer Stellung, in der das in der ersten Schleusenkammer 11' angeordnete dritte Rechengerät 12' mit dem ersten Netzwerk 1 in Verbindung steht. Der zweite Schalter 10" befindet sich in einer Stellung, in der das in der zweiten Schleusenkammer 11" angeordnete dritte Rechengerät 12" mit dem zweiten Netzwerk 2 in Verbindung steht.

Standard-Datenübertragungsprotokolle, wie bspw. TCP/IP, wie sie in dem ersten und in dem zweiten Datennetzwerk zur Datenübertragung verwendet werden, insbesondere die in den Datenpaketen enthaltenen Routing-Informationen und Port Access Informationen sind anfällig gegenüber vielerlei bekannten Netzwerk-Attacken, wie bspw. Denial of Service (DoS) oder Syn Attacken, Fragments und andere neuartige Netzwerkattacken. Die vorliegende Erfindung bietet erstmals eine Möglichkeit, ein Netzwerk gegen solche Attacken wirkungsvoll zu schützen, indem verschiedene zusätzliche Schutzmaßnahmen vorgesehen werden, von denen insbesondere "protocol isolation" und "application separation" erwähnt seien.

## Patentansprüche

1. Schleusenelement (4) umfassend einen ersten Rechner (5), der einem ersten Datennetzwerk (1) zugeordnet ist, einen zweiten Rechner (7), der einem zweiten Datennetzwerk (2) zugeordnet ist, und mindestens eine zwischen dem ersten Rechner (5) und dem zweiten Rechner (7) angeordnete Schleusenkammer (11; 11', 11"), wobei das Schleusenelement (4) für eine Datenübertragung zwischen dem ersten Datennetzwerk (1) und dem zweiten Datennetzwerk (2) bei gleichzeitiger physikalischen Trennung des ersten Netzwerks (1) von dem zweiten Netzwerk (2) ausgebildet ist, indem die mindestens eine Schleusenkammer (11; 11', 11") wechselweise entweder mit dem ersten Rechner (5) oder mit dem zweiten Rechner (7) verbunden ist, und wobei das erste Datennetzwerk (1) zur Übertragung von Daten nach einem ersten Datenübertragungsprotokoll und das zweite Datennetzwerk (2) zur Übertragung von Daten nach einem zweiten Datenübertragungsprotokoll ausgebildet ist, **dadurch gekennzeichnet, dass** das Schleusenelement (4) für eine Datenübertragung zwischen dem ersten Datennetzwerk (1) und dem zweiten Datennetzwerk (2) erste Mittel (40) zur Umwandlung eingehender Daten von dem in dem Datennetzwerk (2), über das die Daten eingehen, verwendeten Datenübertragungsprotokoll in ein drittes Datenübertragungsprotokoll und zweite Mittel (40) zur Umwandlung der Daten von dem dritten Datenübertragungsprotokoll in das in dem Datennetzwerk (1), über das die Daten ausgehen, verwendete Datenübertragungsprotokoll aufweist, wobei sich das dritte Datenübertragungsprotokoll von dem in dem Datennetzwerk (2), über das die Daten eingehen, verwendeten Datenübertragungsprotokoll unterscheidet.

2. Schleusenelement (4) nach Anspruch 1, **dadurch gekennzeichnet, dass** das erste Datenübertragungsprotokoll und das zweiten Datenübercragungsprotokoll identische Datenübertragungsprotokolle sind.

3. Schleusenelement (4) nach Anspruch 2, **dadurch gekennzeichnet, dass** das erste Datenübertragungsprotokoll und das zweiten Datenübertragungsprotokoll ein Standard-Datenübertragungsprotokoll sind.

4. Schleusenelement (4) nach Anspruch 3, **dadurch gekennzeichnet, dass** das erste Datenübertragungsprotokoll und das zweiten Datenübertragungsprotokoll ein TCP/IP sind.

5. Schleusenelement (4) nach einem der Ansprüche 1 bis 4, **dadurch gekennzeichnet, dass** das dritte Datenübertragungsprotokoll kein Standard-Datenübertragungsprotokoll ist.

6. Schleusenelement (4) nach Anspruch 5, **dadurch gekennzeichnet, dass** das dritte Datenübertragungsprotokoll ein gezielt für den Einsatz zur Datenübertragung in dem Schleusenelement (4) entwickeltes proprietäres Datenübertragungsprotokoll ist.

7. Schleusenelement (4) nach einem der Ansprüche 1 bis 6, **dadurch gekennzeichnet, dass** die über das Datennetzwerk (2; 1), über das die Daten in das Schleusenelement (4) eingehen, zu übertragenden Daten gemäß dem in dem Datennetzwerk (2; 1) verwendeten Datenübertragungsprotokoll in Datenpakete (50', 50") unterteilt sind und dass die ersten Mittel (40) die in dem Schleusenelement (4) eingehenden Datenpakete (50', 50") sammeln und zu den Daten (51) in der Anwendungsschicht zusammensetzen, diese dann in Dateneinheiten (52) gemäß dem dritten Datenübertragungsprotokoll verpacken und die Dateneinheiten (52) in dem Schleusenelement (4) zu den zweiten Mitteln (4) übertragen.

8. Schleusenelement (4) nach Anspruch 7, **dadurch gekennzeichnet, dass** die zweiten Mittel (40) die von den ersten Mitteln (40) empfangenen Dateneinheiten (52) wieder zu den Daten (51) in der Anwendungsschicht zusammensetzen und diese dann zur Datenübertragung über das Datennetzwerk (1; 2), über das die Daten das Schleusenelement (4) verlassen, in Datenpakete (50', 50") gemäß dem in dem Datennetzwerk (1; 2) verwendeten Datenübertragungsprotokoll umwandeln.

9. Schleusenelement (4) nach einem der Ansprüche 1 bis 8, **dadurch gekennzeichnet, dass** die ersten Mittel (40) nur Daten mindestens eines vorgebbaren Datentyps zu den Daten (51) in der Anwendungsschicht zusammensetzen und in die Dateneinheiten (52) gemäß dem dritten Datenübertragungsprotokoll umwandeln.

10. Schleusenelement (4) nach Anspruch 9, **dadurch gekennzeichnet, dass** die ersten Mittel (40) für jeden Datentyp gesonderte Umwandlungsmittel (40', 40", 40'", 40"") zum Zusammensetzen der Daten des vorgegebenen Datentyps in die Daten in der Anwendungsschicht und zur Umwandlung der Daten in die Dateneinheiten (52) gemäß dem dritten Datenübertragungsprotokoll aufweisen.

11. Schleusenelement (4) nach Anspruch 9 oder 10, **dadurch gekennzeichnet, dass** die vorgegebenen Datentypen mindesten einen der nachfolgenden Datentypen umfassen:
- Austausch von Dateien (File Exchange),
- Austausch von elektronischen Nachrichten (Mail Exchange), und
- Synchronisation und Kopieren von Datenbankinhalten (Database Synchronization/ Replication).

12. Schleusenelement (4) nach einem der Ansprüche 1 bis 11, **dadurch gekennzeichnet, dass** die mindestens eine Schleusenkammer (11; 11', 11") Mittel (43) zum Durchsuchen der in die mindestens einen Schleusenkammer (11; 11', 11") übertragenen Daten auf bestimmte Dateninhalte aufweist, welche die Sicherheit und/oder ordnungsgemäße Funktion des Schleusenelements (4) und/oder von Rechnern (5, 6) des Datennetzwerks (1), für das die Daten bestimmt sind, beeinträchtigen

13. Schleusenelement (4) nach Anspruch 12, **dadurch gekennzeichnet, dass** die Mittel (43) zum Durchsuchen der in die mindestens einen Schleusenkammer (11; 11', 11") übertragenen Daten in der Anwendungsschicht (Application Layer) auf die bestimmten Dateninhalte durchsuchen.

14. Schleusenelement (4) nach Anspruch 12 oder 13, **dadurch gekennzeichnet, dass** die Mittel (43) zum Durchsuchen nur aktiv sind, wenn die Verbindung zwischen der mindestens einen Schleusenkammer (11; 11', 11") und dem Datennetzwerk (2; 1), über das die zu übertragenden Daten eingehen, physikalisch unterbrochen ist.

15. Schleusenelement (4) nach einem der Ansprüche 1 bis 14, **dadurch gekennzeichnet, dass** in dem Schleusenelement (4) Vorkehrungen getroffen sind, damit eine Datenübertragung zwischen dem ersten Rechner (5) und der mindestens einen Schleusenkammer (11, 11', 11") bzw. zwischen dem zweiten Rechner (7) und der mindestens einen Schleusenkammer (11; 11', 11") nur von der mindestens einen Schleusenkammer (11; 11', 11") aus bzw. von einem der mindestens einen Schleusenkammer (11; 11', 11") zugeordneten dritten Rechner (12', 1.2") veranlasst werden kann.

16. Schleusenelement (4) nach einem der Ansprüche 1 bis 15, **dadurch gekennzeichnet, dass** dem Schleusenelement (4) ein externer Zeitgeber (35) zur Vorgabe der Zeitpunkte (t) zum Umschalten der mindestens einen Schluesenkammer (11; 11', 11") zwischen dem ersten Rechner (5) und dem zweiten Rechner (7) zugeordnet ist, wobei der Zeitgeber (35) auf einer separaten elektronischen Leiterplatte (37) angeordnet ist.

17. verfahren zum Schutz eines ersten Datennetzwerks (1) vor einem direkten Zugriff aus einem zweiten Datennetzwerk (2) heraus, wobei zwischen dem ersten Datennetzwerk (1) und dem zweiten Datennetzwerk (2) ein Schleusenelement (4) für eine physikalische Trennung des ersten Datennetzwerks (1) von dem zweiten Datennetzwerk (2) durch wechselweises Verbinden des Schleusenelements (4) entweder mit dem ersten Datennetzwerk (1) oder mit dem zweiten Datennetzwerk (2) angeordnet wird, und wobei das erste Datennetzwerk
(1) zur Übertragung von Daten nach einem ersten Datenübertragungsprotokoll und das zweite Datennetzwerk (2) zur Übertragung von Daten nach einem zweiten Datenübertragungsprotokoll ausgebildet ist, **dadurch gekennzeichnet, dass** die in das Schleusenelement (4) eingehenden Daten von dem zweiten Datenübertragungsprotokoll in ein drittes Datenübertragungsprotokoll umgewandelt, gemäß dem dritten Datenübertragungsprotokoll in dem Schleusenelement (4) übertragen und dann von dem dritten Datenübertragungsprotokoll in das erste Datenübertragungsprotokoll umgewandelt werden, wobei sich das dritte Datenübertragungsprotokoll von dem zweiten Datenübertragungsprotokoll unterscheidet.

18. Verfahren nach Anspruch 17, **dadurch gekennzeichnet, dass** das Schleusenelement (4) einen dem ersten Datennetzwerk (1) zugeordneten ersten Rechner (5), einen dem zweiten Datennetzwerk (2) zugeordneten zweiten Rechner (7), und mindestens eine Schleusenkammer (11; 11', 11") aufweist, die wechselweise mit dem ersten Rechner (5) oder mit dem zweiten Rechner (7) verbunden wird, wobei der mindestens einen Schleusenkammer (11; 11', 11") mindestens ein dritter Rechner (12'; 12") zugeordnet ist und eine Datenübertragung zwischen dem ersten Rechner (5) und dem dritten Rechner (12'; 12") bzw. zwischen dem zweiten Rechner (7) und dem dritten Rechner (12'; 12") ausschließlich von dem dritten Rechner (12'; 12") veranlasst wird.

19. Verfahren nach Anspruch 17 oder 18, **dadurch gekennzeichnet, dass** die über das zweite Datennetzwerk (2) zu übertragenden Daten in Datenpakete (50', 50") unterteilt werden und dass die in dem Schleusenelement (4) eingehenden Datenpakete (50', 50") gesammelt und zu den Daten (51) in der Anwendungsschicht zusammengesetzt werden, diese in Dateneinheiten (52) gemäß dem dritten Datenübertragungsprotokoll verpackt und die Dateneinheiten (52) in dem Schleusenelement (4) übertragen werden.

20. Verfahren nach Anspruch 19, **dadurch gekennzeichnet, dass** die in dem Schleusenelement (4) übertragenen Dateneinheiten (52) wieder zu den Daten (51) in der Anwendungsschicht zusammengesetzt und diese dann zur Datenübertragung über das erste Datennetzwerk (1) in Datenpakete (50', 50") gemäß dem ersten Datenübertragungsprotokoll umgewandelt werden.

21. Verfahren nach einem der Ansprüche 17 bis 20, **dadurch gekennzeichnet, dass** die in dem Schleusenelement (4) übertragenen Daten, vorzugsweise in der Anwendungsschicht (Application Layer), auf bestimmte Dateninhalte durchsucht werden, welche die Sicherheit und/oder ordnungsgemäße Funktion des Schleusenelements (4) und/oder von Rechnern (5, 6) des ersten Datennetzwerks (1) beeinträchtigen.

22. Verfahren nach Anspruch 21, **dadurch gekennzeichnet, dass** die in dem Schleusenelement (4) übertragenen Daten (51) nur dann auf die bestimmten Dateninhalte durchsucht werden, wenn die Verbindung zwischen dem Schleusenelement (4) und dem zweiten Datennetzwerk (2) physikalisch unterbrochen ist.
